# EUROPEAN PATENT APPLICATION

(11) **EP 4 722 097 A1**
(43) Date of publication of application: **08.04.2026**
(21) Application number: 24815548.3
(22) Date of filing: 30.05.2024
(51) Int. Cl.: B63B 79/40, B63B 43/18, B63B 49/00, B63H 25/04, G08G 3/02

(54) **NAVIGATION ASSISTANCE SYSTEM**

(30) Priority: 30.05.2023 JP 2023088654
(71) Applicant: Mitsui O.S.K. Lines, Ltd., Tokyo 105-8688 (JP)
(72) Inventor: SATAKE, Kenichi, Tokyo 105-8688 (JP); UMEDA, Ayako, Tokyo 105-8688 (JP); SUZUKI, Takeru, Tokyo 105-8688 (JP)
(74) Representative: Meissner Bolte Partnerschaft mbB
(86) International application number: PCT/JP2024/019807
(87) International publication number: WO 2024/248067

(57) **Abstract**

A navigation assistance system (1) stores therein rule estimation logic for estimating a relationship in application of a rule to conduct of a vessel, and own ship setting data including a parameter indicating a characteristic of an own ship, and acquires own ship data indicating information on a state of the own ship, acquires target data indicating information on a state of a target, acquires surrounding data indicating information on a state of surrounding of the own ship, generates situational awareness data indicating a situation for determining an action of the own ship, based on the own ship data, the target data, and the surrounding data, specifies a relative relationship between the own ship and the target, based on the situational awareness data, and estimates an applicable rule to be applied to the own ship, based on the specified relative relationship and the own ship setting data, in accordance with the rule estimation logic.

## Description

### Technical Field

The present invention relates generally to a navigation assistance system for assistance of navigation.

### Background Art

In recent years, realization of automated navigation has been expected for the purpose of shortage of seafarers, reduction in their workload, and the like. Support technologies such as the Integrated Navigation System (INS), which integrates functions such as the Electronic Chart Display and Information System (ECDIS), Automatic Radar Plotting Aids (ARPA), and track control, have been introduced. However, most of navigational watch duties are performed by seafarers and, in order to realize automated navigation, it is necessary to automate the navigational watch duties performed by the seafarers.

Devices to be introduced into vessels, which are technically feasible but lack economical rationality are difficult to install, and the range of use of devices that are not sufficiently reliable is limited. In addition, there are rules that are applicable to vessel navigation, such as treaties such as the Convention on the International Regulations for Preventing Collisions at Sea (COLREG) or the International Convention on Standards of Training, Certification and Watch keeping for Seafarers (STCW), domestic laws and acts such as the Act on Preventing Collisions at Sea, the Maritime Traffic Safety Act, the Port Regulations Act, and the Mariners Law, or the like. Using devices employing the technology that cannot comply with these rules is risky in terms of safety and compliance with laws and regulations.

In addition, the rules applicable to the vessel navigation are different in the range of application based on the water area and topography, and some are further different in the range of application depending on the state of visibility based on weather and sea conditions. When proposing a collision avoidance route, it is necessary to determine the range of application of the rules based on these surrounding conditions. Furthermore, to determine the range of application of the rules, it is necessary to consider not only the relationship in position between an own ship and other vessels, but also the surrounding conditions.

However, the various conventional technologies that suggest collision avoidance routes (see, for example, Patent Literatures 1 to 6) do not present the users with conditions on the compliance with rules, reasons for determination, and the like, and the differences in the applied rules are not considered depending on the surrounding conditions either.

In addition, many of the collision avoidance routes based on path planning to avoid obstacles using robotics technology do not comply with the rules provided by COLREG. These collision avoidance routes may be acceptable according to COLREG but may be significantly different from the sense of a human pilot, or may pose safety issues in terms of the maneuverability of the own ship and response to the movements of the other vessels, and some are not considered to comply with the rules for safe vessel navigation.

Furthermore, use of artificial intelligence (AI) in decision-making from target detection to collision avoidance is also considered, but the processes and the reasons for decision-making are a black box and unclear, which is considered as problems in view of the perspective of responsibility.

### Citation List

### Patent Literatures

Patent Literature 1: JP 6535896 B
Patent Literature 2: JP 7069371 B
Patent Literature 3: JP 7080320 B
Patent Literature 4: JP 2021-146778 A
Patent Literature 5: JP 2021-160550 A
Patent Literature 6: JP 2023-13071 A

### Summary of Invention

The object of the present invention is to provide a navigation assistance system capable of clarifying the actions which comply with various rules applicable to vessel navigation and the reasons for those determinations.

A navigation assistance system according to an aspect of the present invention includes a rule estimation logic storage storing a rule estimation logic for estimating a relationship in application of a rule to conduct of a vessel, an own ship setting data storage storing own ship setting data including a parameter indicating a characteristic of an own ship, an own ship data acquirer acquiring own ship data indicating information on a state of the own ship, a target data acquirer acquiring target data indicating information on a state of a target, a surrounding data acquirer acquiring surrounding data indicating information on a state of surrounding of the own ship, a situational awareness data generator generating situational awareness data indicating a situation for determining an action of the own ship, based on the own ship data acquired by the own ship data acquirer, the target data acquired by the target data acquirer, and the surrounding data acquired by the surrounding data acquirer, a relative relationship specifier specifying a relative relationship between the own ship and the target, based on the situational awareness data generated by the situational awareness data generator, and a rule estimator estimating an applicable rule to be applied to the own ship, based on the relative relationship specified by the relative relationship specifier and the own ship setting data stored in the own ship setting data storage, in accordance with the rule estimation logic stored in the rule estimation logic storage.

### Brief Description of Drawings

FIG. 1 is a schematic diagram showing an application of COLREG according to an embodiment of the present invention.
FIG. 2 is a schematic diagram showing a relationship in application of rules on the course and speed between the own ship and the other vessel according to the present embodiment.
FIG. 3 is a schematic diagram showing a relative relationship and a relationship in action stages and actions between the own ship and other vessels according to the embodiment.
FIG. 4 is a conceptual diagram showing a data structure of a preset scenario according to the embodiment.
FIG. 5 is a configuration diagram showing a configuration for converting a collision avoidance operation into a machine readable description according to the embodiment.
FIG. 6 is a conceptual diagram showing conversion from practical description data into machine readable description data according to the embodiment.
FIG. 7 is a conceptual diagram showing a scenario of overtaking in a yellow phase according to a present embodiment.
FIG. 8 is a conceptual diagram showing a scenario of overtaking in a yellow phase according to the present embodiment.
FIG. 9 is a conceptual diagram showing a scenario of meeting in a green phase according to the present embodiment.
FIG. 10 is a conceptual diagram showing a scenario of meeting in a yellow phase according to the present embodiment.
FIG. 11 is a conceptual diagram showing a scenario of crossing from starboard side in a green phase according to the present embodiment.
FIG. 12 is a conceptual diagram showing a scenario of crossing from port side in a yellow phase according to the present embodiment.
FIG. 13 is a conceptual diagram showing a scenario of being overtaken from port side in a yellow phase according to the present embodiment.
FIG. 14 is a conceptual diagram showing a scenario of being overtaken from starboard side in a yellow phase according to the present embodiment.
FIG. 15 is a conceptual diagram showing a scenario of multiple targets according to the present embodiment.
FIG. 16 is a conceptual diagram showing a scenario of the multiple targets including those not included in calculation target according to the present embodiment.
FIG. 17 is a configuration diagram showing a configuration of a navigation assistance system according to the present embodiment.
FIG. 18 is a configuration diagram showing a data configuration of a data storage unit according to the present embodiment.
FIG. 19 is an image diagram showing a first screen for user settings displayed on a user terminal according to the present embodiment.
FIG. 20 is an image diagram showing a second screen for user settings displayed on the user terminal according to the present embodiment.
FIG. 21 is a diagram showing item examples of an integrated target list according to the present embodiment.
FIG. 22 is a conceptual diagram showing states on own ship actions according to the present embodiment.
FIG. 23 is a flowchart for determining a rule based on a water area in the applicable rules according to the present embodiment.
FIG. 24 is a flowchart for determining a rule based on a field of view in the applicable rules according to the present embodiment.
FIG. 25 is a flowchart for determining a rule based on the relationship in position in the applicable rules according to the present embodiment.
FIG. 26 is a flowchart for determining a rule based on the other vessel state in the applicable rules according to the present embodiment.
FIG. 27 is a flowchart for determining a rule based on a stand-on vessel in the application rules according to the present embodiment.
FIG. 28 is a flowchart for determining the action stage according to the present embodiment.
FIG. 29 is a flowchart for determining action timing according to the present embodiment.
FIG. 30 is a flowchart showing a process of determining actions according to the present embodiment.
FIG. 31 is a flowchart showing in detail a part of the process of determining the actions according to the present embodiment.
FIG. 32 is a state transition diagram showing state transition of a collision avoidance execution unit according to the present embodiment.
FIG. 33 is a configuration diagram showing a configuration of a switch panel according to the present embodiment.
FIG. 34 is a flowchart showing a process executed by an action execution unit according to the present embodiment.
FIG. 35 is a flowchart showing a process of checking actions of other vessels according to the present embodiment.
FIG. 36 is a flowchart showing a process of checking the conduct of other vessels according to this embodiment.
FIG. 37 is a schematic diagram showing a method of calculating numerical values used in the determination according to the present embodiment.
FIG. 38 is an image diagram showing a screen of a user terminal which displays a situation of a lookout execution unit according to the present embodiment.
FIG. 39 is a schematic diagram showing a case in which the navigation assistance system according to the present embodiment is applied.

### Mode for Carrying Out the Invention

### (Embodiment)

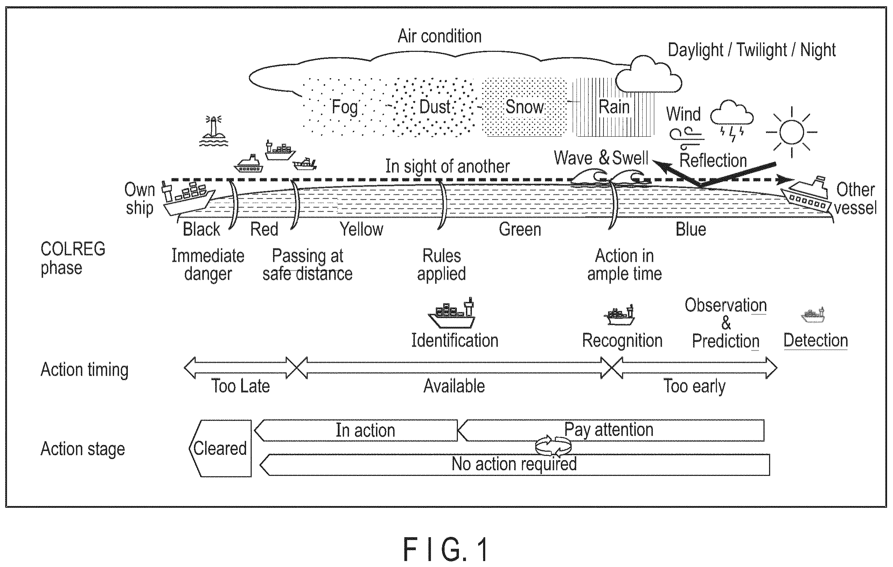

First, a situation to which a convention referred to as COLREG is applied will be described with reference to FIG. 1. Incidentally, the clause numbers and provisions of domestic laws corresponding to COLREG may not be the same as those of COLREG. The clauses of COLREG will be used in the following descriptions. In addition, unless otherwise specified, existing standard names and abbreviations will be used as parameters displayed on navigational instruments.

A relationship between the own ship and the other vessels in sight of one another depends on a distance at which they can be visually recognized. The distance at which they can be visually recognized depends on each height of eye (height of the bridge).

Since the conduct of vessels in sight of one another and the conduct of vessels in restricted visibility are distinguished from each other in COLREG, it is necessary to determine whether the vessels are in sight of one another or in restricted visibility. In addition, in COLREG, special provisions for narrow waterways (Rule 9) and traffic separation systems (Rule 10) are made and special provisions applicable to the other situations are further made.

Regarding lookouts, the convention provides that "Every vessel shall at all times maintain a proper look-out by sight and hearing as well as by all available means appropriate in the prevailing circumstances and conditions so as to make a full appraisal of the situation and or the risk of collision" (Rule 5). In automated navigation, it is assumed that image data obtained by a camera may be used as a substitute for sight, and audio data obtained by a microphone may be used as a substitute for hearing to understand the situation. The use of a radar, an automatic identification system (AIS), and VHF radio mounted as navigation equipment corresponds to "all available means".

It is provided that regarding safe speed, the state of visibility, traffic density, stopping distance of the own ship, turning ability and other maneuverability, at night the presence of background light such as from shore lights, from backscatter of her own lights, the state of wind, sea and current, and the proximity of navigational hazards, and the draught in relation to the available depth of water, should be taken into account, and that when using the radar, the characteristics, efficiency and limitations of the radar equipment, the effect on radar detection of the sea state, weather and other sources of interference, the number, location, and movement of vessels detected by radar, and the like should be taken into account (Rule 6).

Incidentally, under COLREG, the targets of the action to avoid a collision are other vessels, and targets other than vessels, such as navigational aids, fishing gear, floating objects, and offshore structures, and obstacles to the own ship, such as shallow waters, reefs, coastlines, and sunken vessels, are considered to require special attention in terms of safe speed and lookout.

The state of visibility is largely changed due to strong influence of weather and sea conditions. Even within a theoretically visible distance, the range of visibility is varied due to influence of atmospheric conditions such as fog, dust, snowfall, and rainfall, as well as the time periods such as day, twilight, and night, and the like. In order to detect the other vessel and to recognize the target and predict more specific actions while continuing systematic observation and prediction of actions of the targets, the distance between the own ship and the target becomes short. A sensor used for image recognition, and the like is configured to continuously recognize multiple targets, but not to recognize different targets as the same target. In addition, the process of integrating multiple elements of sensor information is performed such that the integrity of each sensor is maintained and the continuity and identity of tracking is guaranteed without integrating different targets.

In COLREG, it is provided that "Every vessel shall use all available means appropriate to the prevailing circumstances and conditions to determine if risk of collision exists. If there is any doubt, such risk shall be deemed to exist" (Rule 7). According to this, use of all available means appropriate to the prevailing circumstances is required regardless of the visible distance. In other words, similarly to Rule 5, not only visual observation and measurement of compass bearing, but the use of radar, AIS, VHF, and the like are required. In COLREG, it is also provided that "Assumptions shall not be made on the basis of scanty information, especially scanty radar information" and that "such risk shall be deemed to exist it the compass bearing of an approaching vessel does not appreciably change" (Rule 7). The navigation assistance system 1 according to the present embodiment comprises a function of detecting the input of scanty information and predicting a decrease in the reliability of the information.

IN addition, regarding actions to avoid collisions, it is provided that "Any action taken to avoid collision shall be taken in accordance with the Rules of this Part and shall, if the circumstances of the case admit, be positive, made in ample time and with due regard to the observance of good seamanship" and "Action taken to avoid a collision with another vessel shall be such as to result in passing at a safe distance. The effectiveness of the action shall be carefully checked until the other vessel is finally past and clear" (Rule 8). In addition, it is provided as an exception in the case of an emergency that "In construing and complying with these Rules due regard shall be had to all dangers of navigation and collision and to any special circumstances, including the limitations of the vessels involved, which may make a departure from these Rules necessary to avoid immediate danger" (Rule 2).

Thus, COLREG includes provisions on the assumption that there are multiple phases in the actions to avoid collision. For this reason, in the present embodiment, the phase on application of COLREG is referred to as "COLREG phase". In addition, the phases to which the COLREG rules are applied are indicated by colors so as to make the rules sensibly understandable, for example, a phase from detection to the action in ample time is indicated by "blue", a phase from the action in ample time to application of the rules of conduct to the vessel is indicated by "green", a distance from the application of the rules to the vessel to the distance at which the vessel can pass while maintaining a safe passing distance is indicated by "yellow", a phase from the safe passing distance to the occurrence of immediate danger is indicated by "red", and a stage at which an immediate danger occurs is indicated by "black". In the figures, the colors are written in parentheses, but when displayed on various screens and the like according to the present embodiment, they are painted in their colors. Incidentally, in FIG. 1, the phases are defined by the distances from the own ship to the other vessel to facilitate understanding, but the phases may also be defined by time.

In the present embodiment, three levels of "action timing", i.e., "Too early", "Available", and "Too late", are set as indicators for determining the timing to start actions to avoid a collision. It is considered desirable to start actions as early as possible, but it is impossible to predict the actions of other vessel at a too early stage. Therefore, the stage at which there is a high possibility that the other vessel alters its course is set as "too early".

In navigation, a vessel may need to take actions to avoid collisions with multiple other vessels. In contrast, COLREG is generally applied to a one-to-one relationship. For this reason, in the present embodiment, four "action stages", i.e., "No action required", "Pay attention", "In action", and "Cleared", are defined to manage the actions to be taken for each of the other vessels. The relationship between "No action required" and "Pay attention" is not a linear change determined based on the distance and the time, but can change from moment to moment depending on changes in the course and speed of the own ship and the other vessels.

The COLREG phases, the action timing, and the action stages are states based on the relative relationship between the own ship and the target, and are parts of the factors for determination of application of the rules provided by COLREG.

ECDIS, which is navigation equipment, comprises a target list function that displays target data acquired as navigation equipment data in list format. ECDIS may be existing equipment. The COLREG phases, the operation timing, and the operation stages are systematically observed using an integrated target list. The integrated target list is a list for managing integrated target data in which additional information indicating the rule application determination factors is integrated into target data. The rule application determination factors are determined based on the relative relationship between the own ship and the target, which are acquired from the navigation equipment.

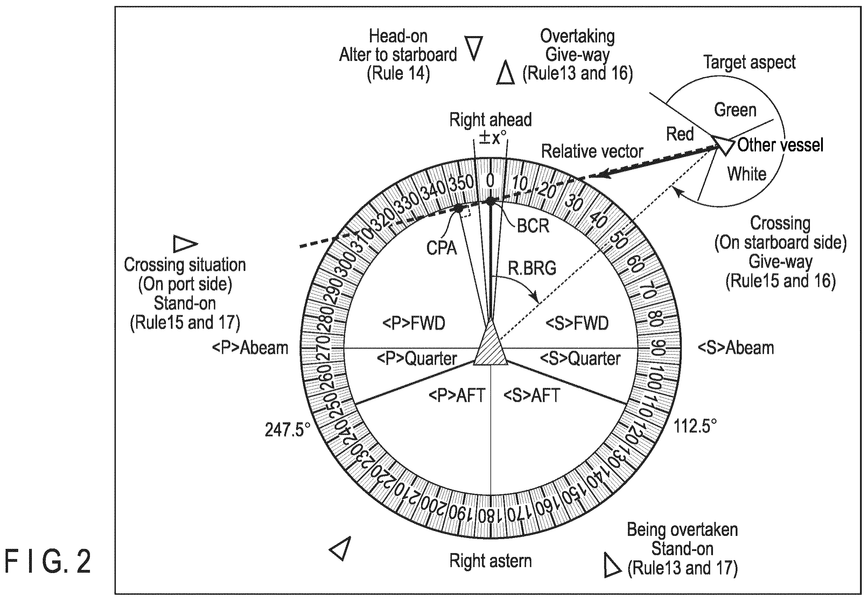

The applicable rules that are estimated based on the relative relationship between the own ship and the target and that are applicable to the own ship, i.e., the application of rules based on the course and speed of the own ship and other vessels, will be described with reference to FIG. 2. In the vessel navigation, absolute bearing is basically used as the bearing. The absolute bearing is measured clockwise starting from the north, which is set to 0°. In the present embodiment, the conduct defined under COLREG is determined in the relationship between the relative bearing (R.BRG) of the other vessel in a case where the heading bearing of the own ship is set to 0°, and the target aspect (TA), which is the relative bearing from the other vessel to the own ship. Since the vessel has an overall length of several hundred meters or more, Consistent Common Reference Point (CCRP) is used in the navigation equipment.

In CORLEG, it is provided that "A vessel shall be deemed to be overtaking when coming up with another vessel from a direction more than 22.5° abaft her beam, that is, in such a position with reference to the vessel she is overtaking, that at night she would be able to see only the sternlight of that vessel but neither of her sidelights" (Rule 13). In addition, as a standard for the application of conduct, numerical standards for relative bearing are defined and, in order to ensure their effectiveness, provisions are made specifying the illumination angle and color of each of the lights of "masthead light", "sidelight", and "sternlight" (Rule 21).

Regarding the sidelight, it is provided that "green light on the starboard side and a red light on the port side each showing an unbroken light over an arc of the horizon of 112.5° and so fixed as to show the light from right ahead to 22.5° abaft the beam on its respective side" and it is provided that the sternlight is "white light placed as nearly as practicable at the stern showing an unbroken light over an arc of the horizon of 135° and so fixed as to show the light 67.5° from right aft on each side of the vessel" (Rule 21). Accordingly, the seafarers can grasp the relative relationship to the other vessels at night and the target aspect, based on the colors of the lights and the positional relationship.

In contrast, as for the human sense, the bearing is recognized and shared not only as the absolute bearing, but also as a directional zone and point (11.25° obtained by dividing 360 degrees into 32 equal parts). In the present embodiment, the heading of the own ship is defined as 0°, 0±x° is defined as "right ahead", 0+x° to 90° is defined as "starboard forward" (<S>FWD), 90° is defined as "starboard abeam" (<S>Abeam), 90° to 112.5° is defined as "starboard quarter" (<S>Quarter), 112.5° to 180° is defined as "starboard aft" (<S>AFT), 180° is defined as "right astern" (right astern), 180° to 247.5° is defined as "port aft" (<P>AFT), 247.5° to 270° is defined as "port quarter" (<P>Quarter), 270° is defined as "port beam" (<P>Abeam), and 270° to (0-x)° is defined as "port forward" (<P>FWD). The reason for setting the range of ±x° from the right ahead that the standard for determination of the "meeting", which is applied to "When two power-driven vessels are meeting on reciprocal or nearly reciprocal courses", is defined qualitatively as "when a vessel sees the other ahead or nearly ahead" (Rule 14), and that there are also various standards for determining this range. In contrast, it is provided that "In the forward direction, sidelights as fitted on the vessel shall show the minimum required intensities. The intensities shall decrease to reach practical cut-off between 1° and 3° outside the prescribed sectors" (Annex I 9. (a) (i)), and the residual light extends to 3 degrees at the maximum to the opposite side. For this reason, in the present embodiment, x° is set to 3°.

In COLREG, the conduct of vessels in sight of one another is categorized into Rule 13 "Overtaking", Rule 14 "Head-on situation", and Rule 15 "Crossing situation", and the actions that each vessel should take are defined. FIG. 2 shows a general correspondence between the conduct and the bearing.

For example, the "Crossing" (Rule 15) is defined such that "When two power-driven vessels are crossing so as to involve risk of collision, the vessel which has the other on her own starboard side shall keep out of the way and shall, if the circumstances of the case admit, avoid crossing ahead of the other vessel". Thus, the actions that each vessel should take is qualitatively defined in COLREG. Each vessel can determine the relationship in application of the rules based on the angle at which the lights are visible.

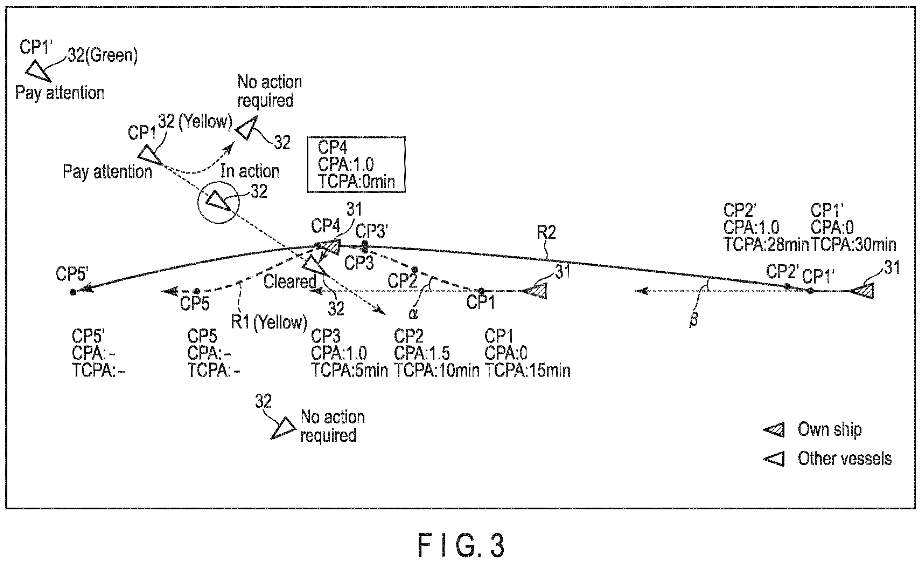

More specifically, as shown in FIG. 3, if the other vessel is located between 0° and 112.5° from the own ship, the own ship may show a green light to the other vessel. If the target aspect, which is the relative heading of the own ship as seen from the other vessel, is between 247.5° and 357°, the other vessel may show a red light to the own ship. Based on this positional relationship, the condition that the own ship sees the other vessel "on the starboard side" can be determined.

For the "overtaking" (Rule 13), if the other vessel is ahead of the own ship and its speed is faster than the own ship, no action is required to avoid the other vessel since the own ship may not catch up the other vessel and, if the other vessel is behind the own ship and its speed is slower than the own ship, the own ship is not bound by the obligation as the stand-on vessel (Action by Stand-On Vessel) the own ship may not be caught up. Therefore, the applicable rules are also determined by taking into account relative speeds.

Generally, "Closest Point of Approach" (CPA) displayed on the Automatic Radar Plotting Aids (ARPA), which are required to be installed on certain vessels, is used for the determination of the "risk of collision". The CPA is calculated as a distance from the own ship to a point where a line drawn by extending a relative vector between the own ship and the other vessel intersects with a circle centered on the own ship. The time which it takes for the other vessel to reach the CPA point is referred to as "Time to the Closest Point of Approach" (TCPA). In addition, a distance to the point where the relative vector intersects with the heading is referred to as "Bow Crossing Range" (BCR). The time which it takes for the other vessel to reach the BCR point is referred to as "Bow Crossing Time" (BCT). In practice, these values are used to determine the risk of collision and the need for action to ensure the safe passing distance required for the own ship.

A relative relationship between an own ship 31 and other vessel 32, the action stages, and the relationship in action will be described with reference to FIG. 3. FIG. 3 virtually shows the relationship between the position and relative bearing of the other vessel 32 and the action stages, and is a diagram showing an example in which the collision avoidance for the crossing situation on the starboard side is performed only by alternation of the course. In actual operation, the alternation of the course alone is the main means for the collision avoidance action, in waters for navigation using the main engine as a ring-up engine.

The navigation assistance system 1 according to the present embodiment sets multiple check points (CP: Check Point) to check the validity of the collision avoidance actions and checks whether preset requirements are met.

Check point CP1 is an action start point, where the own ship 31 turns the heading of the vessel toward the counterpart. Check point CP2 is the point where the heading (HDG: heading) of the own ship exceeds the true bearing of the other vessel 32 to make the collision avoidance, and is on a course enabling the set CPA and BCR to be ensured, i.e., which may be cleared if the vessel continues the navigation, and is the position where an altered course angle θ from an original course line is the largest. After the check point CP2, in order to minimize deviation from the original course line while maintaining the safe passing distance, the own ship 31 starts an action referred to as "follow the target stern" while maintaining the set CPA. At this time, the vessel needs to maneuver so as not to take an action giving anxiety to the other vessel 32. In any action, it is necessary to take a clear action so as not to cause doubts to the other vessel 32 or lead to the possibility of a collision. Check point CP3 is the point where the action of returning to the original course line is started, and is the point where the original course line becomes parallel to HDG (or course over ground (COG)). The magnitude of the actions after the check point CP3 varies depending on the surrounding conditions. In ocean voyages, there is no need to immediately return to the original course line, no deviation from the original course lines occurs once the course line of the own ship 31 becomes parallel to the original course line and, after that, the own ship 31 may gradually return to the original course line. In contrast, in coastal voyages and the like, the own ship 31 continues following the target stern so as to quickly return to the original course line. Check point CP4 is the point where it can be determined that the own ship 31 has safely passed the other vessel 32. The determination of whether or not the own ship has passed the other vessel 32 depends on the COLREG situation with the other vessel 32 (Conduct of vessels in sight of one another). After passing, restrictions on the actions of the own ship 31 are canceled, and the own ship 31 continues returning to the original course line in accordance with the surrounding conditions. Check point CP5 is the point where the course is set after the position of the own ship returns to the original course line and it can be determined that maneuvering the collision avoidance is complete.

In FIG. 3, the other vessels 32 marked with "no action required" are in a situation that CPA and BCR exceed the set values and there is no risk of collision. The other vessels 32 marked with "Pay attention" are in a situation that CPA or BCR is below the set value but no action is started. The other vessel 32 marked with "In action" is in a situation the vessel is taking an action based on a proposed collision avoidance route. The other vessel 32 marked with "Cleared" is in a situation that the vessel has met the predetermined cleared conditions. In addition, the figure also shows a case where since the other vessel 32 in the pay attention stage alters the course, CPA or BCR becomes larger than the set value, and no actions need to be taken.

A collision avoidance route R1 represented by a dashed line is an example of an action route in the yellow phase when the conduct provided under COLREG is applied. In this case, the other vessel 32 is approaching from the starboard forward of the own ship 31 in the crossing situation and is in a risk of collision, and the own ship 31 becomes a give-way vessel. In addition, the own ship 31 needs to comply with the provision "avoid crossing ahead of the other vessel" (Rule 15).

Furthermore, it is provided by COLREG that "Any alteration of course and/or speed to avoid collision shall, if the circumstances of the case admit, be large enough to be readily apparent to another vessel observing visually or by radar; a succession of small alterations of course and/or speed should be avoided" and that "Action taken to avoid a collision with another vessel shall be such as to result in passing at a safe distance. The effectiveness of the action shall be carefully checked until the other vessel is finally past and clear" (Rule 8). For this reason, when taking the collision avoidance action, the collision avoidance action needs to be taken at least the following steps.
(a) Stage of remarkably making the alternation such that the other vessel can easily admit the alternation.

The relationship among the CPA values at each check point is CPA after the collision avoidance operation (check point CP2) ≥ CPA during following the target stern (check point CP3) ≥ CPA set as the safe passing distance (check point CP4) > CPA before the collision avoidance operation (check point CP1). TCPA (check point CP1), which is the action start point, is determined by distance or time when it is determined that the conduct provided under COLREG is applied. The action start point differs depending on the speed and maneuverability of the own ship 31. The altered course angle θ required to ensure the set safe passing distance is also calculated from the current speed, maneuverability, and the like. By taking an early action, an altered course angle α becomes close to an altered course angle β of the collision avoidance route during early collision avoidance maneuver used in actual navigation in the ocean.
(b) Stage of passing at a safe distance from the other vessel.

The CPA value during following the target stern is maintained at or above the set value in a section from the check point CP3 to the point where TCPA≤0 minutes (check point CP4). In addition, the other vessel 32 is set not to be positioned on the starboard side relative to the right ahead of the own ship 31 so as not to perform maneuvering which gives suspicion to the counterpart. Furthermore, even after passing the closest point of approach (check point CP4), observation is continued until the other vessel 32 passes directly alongside the own ship 31 such that the CPA does not fall below the set value. In this case, the CPA at the time of following the target stern may be set.
(c) Stage of carefully checking the effect of the action until the other vessel is finally past and clear.

The CPA value at the check points CP4 and CP5 is maintained at or above the set value such that the other vessel 32 does not come closest after passing directly alongside the own ship 31, and the own ship 31 takes an action of returning to the original course line. In this case, the TCPA of the other vessel 32 that has been the target of avoidance is displayed as the past or as a negative value.

The collision avoidance route R2 represented by a solid line is an example of an action route before the conduct provided under COLREG is applied, i.e., in the present embodiment, an example of an action route in the green phase. In this case, since the above-described restriction for the conduct defined under COLREG is not applied, the degree of freedom in collision avoidance actions is raised.

Incidentally, it is provided by COLREG that "If there is sufficient sea-room, alteration of course alone may be the most effective action to avoid a close-quarters situation provided that it is made in good time, is substantial and does not result in another close-quarters situation" (Rule 8). Therefore, a margin of time and distance is required when attempting the collision avoidance by altering the only course. In addition, in situations where sufficient sea-room cannot be secured, the above-described actions cannot be taken, and actions corresponding to various situations are taken.

The above-described check points are different from waypoints (WP) on a passage plan. This is because since alternation of the latitude and longitude of the WP and the WP number to execute a collision avoidance is a change to the passage plan, a proper approval process is required. Although the change to the passage plan differs depending on a safety management system (SMS) of a vessel management company, approval is required on board from a captain, a chief engineer, and the like, followed by approval from the vessel management company on land. In the vessel navigation, temporarily deviating from the original course line to take a collision avoidance action is not considered as a change to the passage plan. In the present embodiment, the WP is not changed, and sequential actions are determined based on the relative relationship with the other vessel 32 that is the target of the collision avoidance, and the effectiveness of the action can be carefully checked until the other vessel 32 is finally past and clear as required by Rule 8 of COLREG.

In addition, the own ship 31 may not always be able to take avoidance actions according to the standard procedures, and various collision avoidance actions may occur depending on the surrounding situations and the results of communication with the other vessel 32. For example, even in a relationship of "crossing from starboard side", if there is a sufficient distance from the other vessel 32 or if turning to port is necessary for other reasons, a larger action is required since the own ship crosses ahead of the other vessel 32. At this time, the altered course angle should be an amount which can ensure not only the distance (CPA) set by the own ship 31 as a safe passing distance, but also a sufficient distance for the BCR as seen from the other vessel 32. In addition, in a situation of crossing ahead of the bow of the other vessel 32 by turning to port, it is desirable to maintain this action until the own ship crosses ahead of the bow of the other vessel 32, and the point at which the own ship has crossed the bow of the other vessel 32 is the check point CP3.

Moreover, after the COLREG situation has been established in the relationship of "Crossing from port side", the other vessel 32 has an obligation to take a collision avoidance action while the own ship 31 has an obligation to keep the course. In the stage of the green phase, however, the own ship 31 may take a collision avoidance action early and steer not to prevent occurrence of the COLREG situation. In this case, the altered course angle is an altered course angle required to maintain the distance (CPA) set by the own ship 31 as the safe passing distance and, in general, the own ship 31 takes into account the possibility that the other vessel 32 may turn to starboard and also takes a collision avoidance action by turning to starboard. Even in this case as well, it is desirable to maintain this action until the own ship crosses ahead of the bow of the other vessel 32, and the point at which the vessel has crossed the bow of the other vessel 32 becomes the check point CP3.

As described above, since different actions are required depending on the situation at the time to take a collision avoidance action which complies with COLREG, the conditions for determining that the vessel has reached the check point and the actions to be taken after having reached the check point also need to be defined differently. In the present embodiment, multiple preset scenarios that define actions to be taken depending on the situations in which avoidance is required are created and registered.

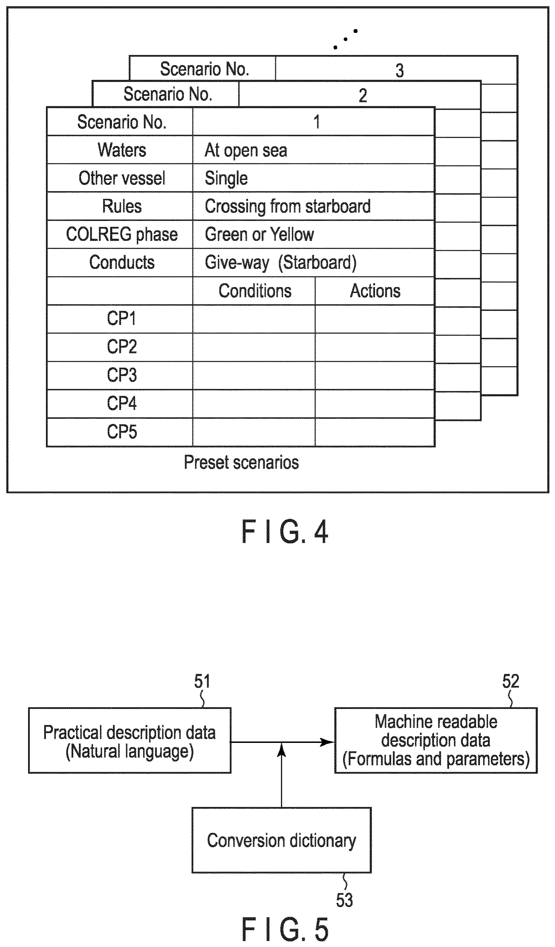

FIG. 4 is an image diagram showing the data structure of preset scenarios. In the preset scenarios, an identifier for identifying the scenario ("Scenario No." in the figure), application conditions under which the scenario can be applied, and an action scenario that defines the conditions for reaching each of check points CP1, CP2, CP3, CP4, and CP5 and the action to be taken after reaching the check point, are set. In this example, water area, the number of other vessels 32, the vessel type, the rules, the COLREG phase, and the action of the own ship can be set as the application conditions. As the preset scenarios, the user creates scenarios at the discretion, but may use scenarios created in advance.

A configuration for converting a collision avoidance action into a description in a machine readable formal language will be described with reference to FIG. 5.

Natural language is generally used when generally explaining collision avoidance actions such as "follow the target stern" described above. In order to convert such actions expressed in natural language into machine readable descriptions that can be processed by a computer, a conversion dictionary 53 is provided in the present embodiment. The conversion dictionary 53 is data for converting practical description data expressed in natural language included in the preset scenarios into machine readable description data that can be processed by a computer.

Using the conversion dictionary 53, the qualitative expressions in COLREG and practical description data 51 expressed in practical natural language are converted into machine readable description data 52. The practical description data 51 is data in which practical determination and actions are expressed in natural language. The machine readable description data 52 is data expressed in the form of expressions, parameters, and the like used in general programming languages. Although the detailed description rules differ depending on the programming languages, it becomes easy to convert the data for application to the programming language to be implemented, by describing with widely used syntax and functions.

It is ideal that the conversion dictionary 53, which complies with the contents of COLREG written in qualitative natural language and converts practical expressions and natural language descriptions in the Operation Procedure Manual (OPM) into machine readable descriptions, is created by a person with practical experience.

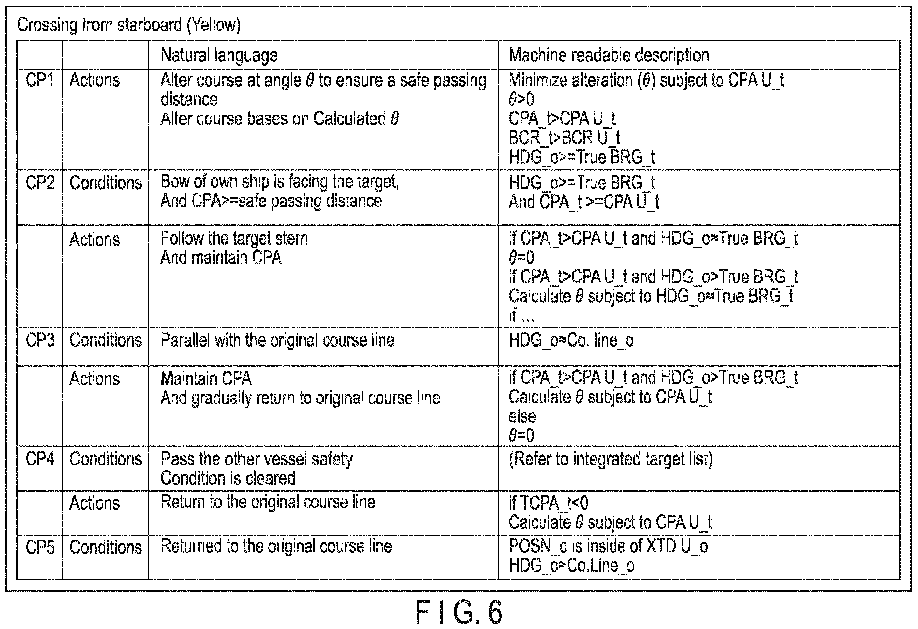

A specific example of converting the practical description data 51 corresponding to the determination and actions made by humans in the case of collision avoidance shown in FIG. 3 into the machine readable description data 52 using the conversion dictionary 53 is shown with reference to FIG. 6. Incidentally, since communication in English is required for the navigation of ocean-going vessels, natural language is usually written in English. However, if the vessel navigates in an only specific country such as Japan, natural language may be written in the language of the country.

Even when humans decide, parameters such as CPA, BCR, and HDG output from the navigation equipment are used as rule application determination factors and collision avoidance action determination factors, and the numerical values that serve as the criteria for determination are expressed in practical descriptions using natural language, in documents such as OPM. More specifically, in the relationship in crossing, under the condition of the check point CP2, the heading (HDG) of the own ship faces the target and collision avoidance maneuvering is conducted to make the CPA longer than the set safe passing distance. When this is converted into a machine readable description, the data is converted into descriptions using the syntax for solving optimization problems, such as "subject to CPA_t > CPA U_t, BCR_t > BCR U_t, HDG_o >= True BRG_t", which means maintaining the conditions that the CPA and the BCR exceed the set values and that the HDG exceeds the set True BRG value, and "Minimize alteration (θ)", which means calculating the altered course angle θ that minimizes the altered course angle θ. By converting the data into the syntax that is easily applicable to the programming languages, the actions similar to human actions can be created by algorithms.

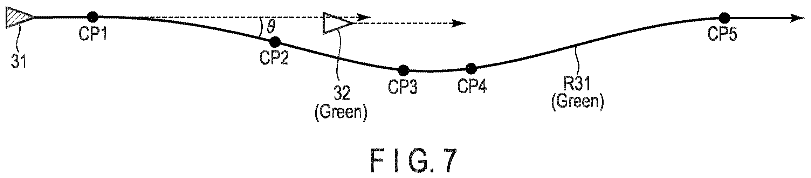

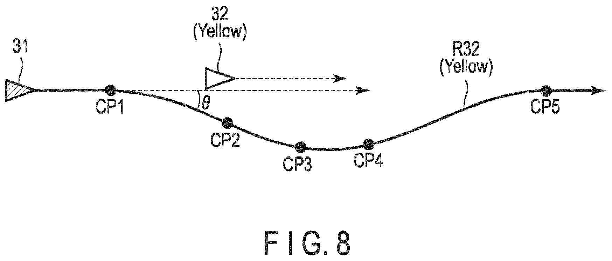

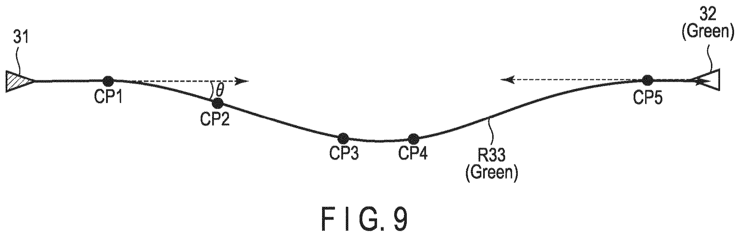

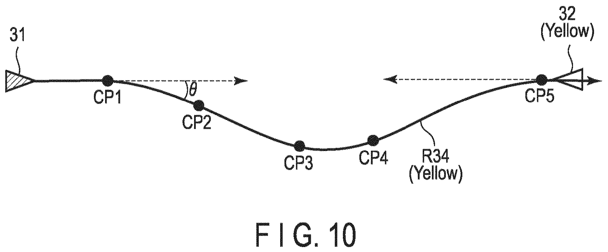

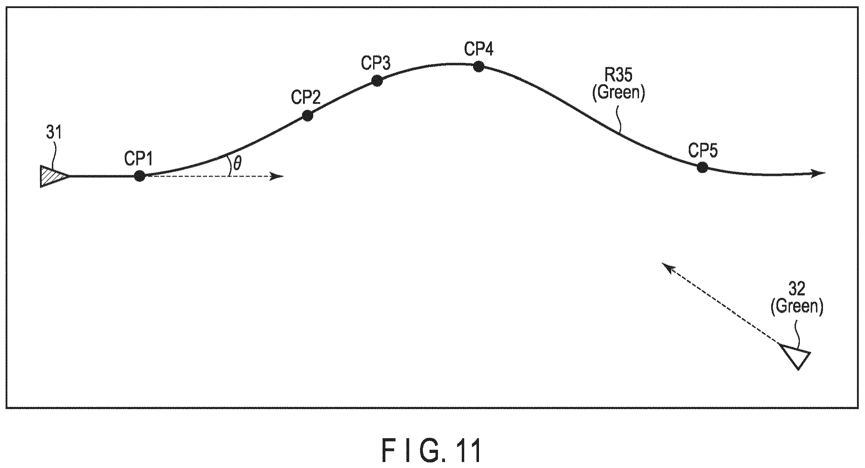

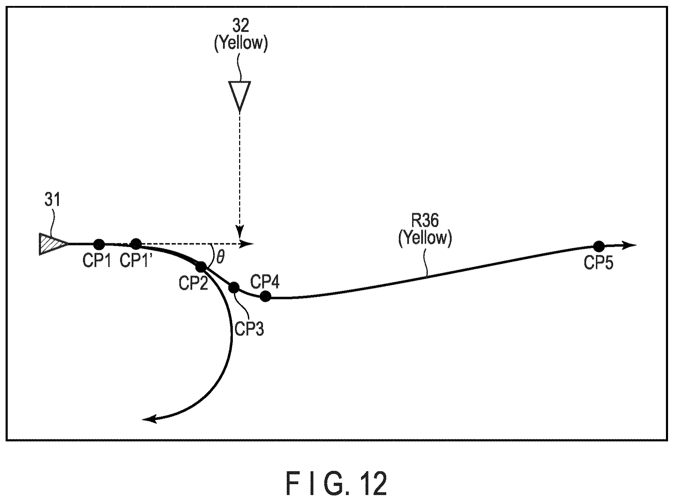

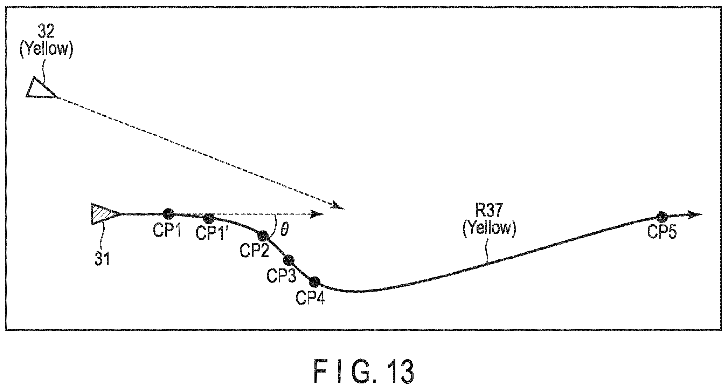

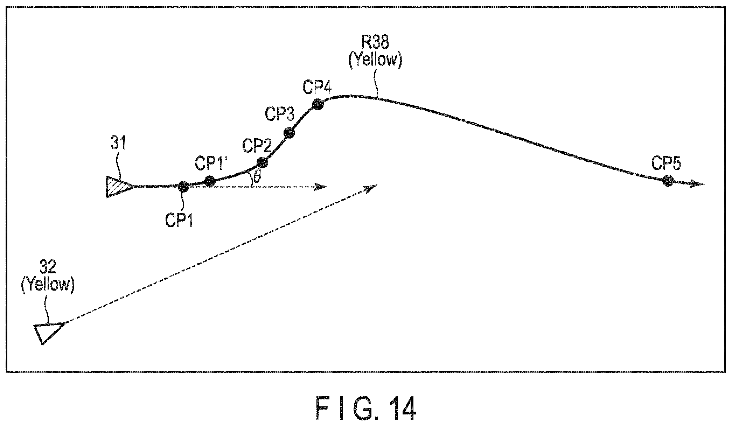

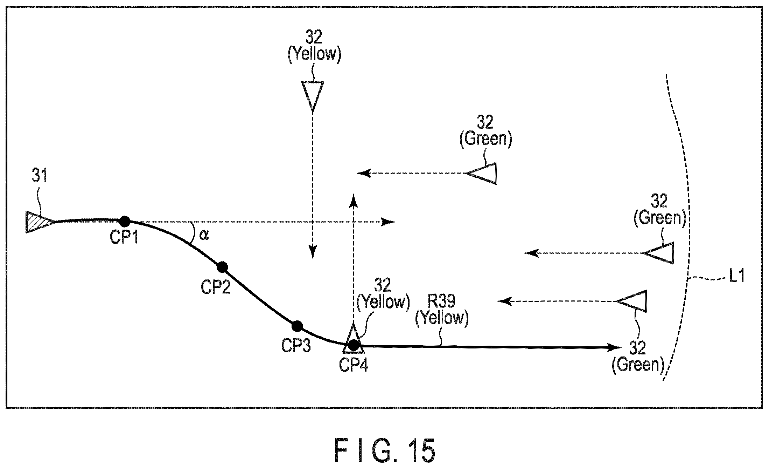

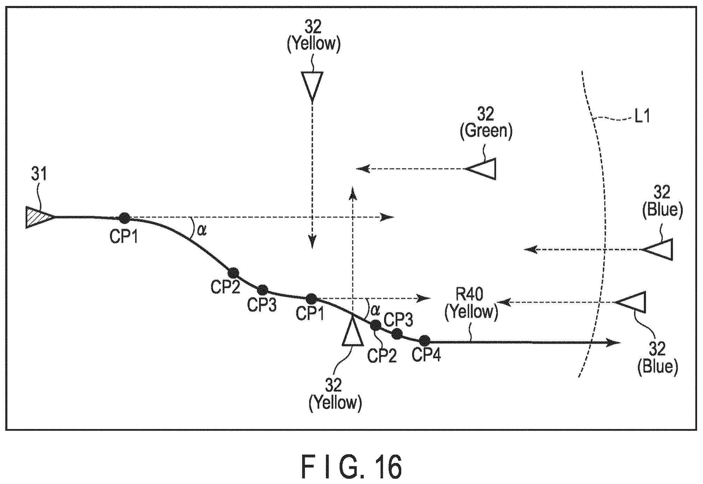

Examples of the preset scenarios will be described with reference to FIG. 7 to FIG. 16. FIG. 7 shows an overtaking scenario in the green phase. FIG. 8 shows an overtaking scenario in the yellow phase. FIG. 9 shows a meeting scenario in the green phase. FIG. 10 shows a meeting scenario in the yellow phase. FIG. 11 shows a scenario of crossing from starboard side in the green phase. FIG. 12 shows a scenario of "crossing from port side" in the yellow phase. FIG. 13 shows a scenario of "being overtaken from port side" in the yellow phase. FIG. 14 shows a scenario of "being overtaken from starboard side" in the yellow phase. FIG. 15 shows a scenario with multiple targets. FIG. 16 shows a scenario with multiple targets including those not included in the calculation.

As shown in FIG. 7 to FIG. 16, various patterns of the preset scenarios can be considered. In each of the scenarios, the practical descriptions have common parts and unique parts. Therefore, the unique parts of the practical descriptions are registered in the conversion dictionary 53 as new description pairs together with the corresponding machine readable descriptions.

FIG. 12, FIG. 13, FIG. 14, and FIG. 15 show scenarios in a case where the own ship 31 is the stand-on vessel. For example, in a relationship in crossing from port side, if avoidance based on an early avoidance action cannot be taken, the obligation to keep the course arises, and the COLREG phase to be set becomes the yellow phase, the own ship 31 is required to take action in accordance with the provision for stand-on vessel under Rule 17. A point at which the action of the stand-on vessel to avoid a collision with the give-way vessel, which is provided under Rule 17, paragraph 2, is started while taking an action of keeping the course and the speed, is referred to as check point CP1. In addition, if the give-way vessel approaches too close and it is admitted that a collision cannot be avoided by the action of the give-way vessel alone, the stand-on vessel is required to take an action as will best aid to avoid collision. A point at which the cooperative action is started is referred to as check point CP1'. Even in this case as well, the altered course angle θ necessary to maintain the distance set by the own ship 31 using CPA as the safe passing distance is calculated, but avoiding a collision is given top priority. For this reason, even if the own ship 31 cannot maintain a safe passing distance, the vessel starts the collision avoidance action to avoid a collision and starts making the heading (HDG) of the own ship face away from the other vessel 32.

A point at which the course angle becomes the altered course angle θ or the point at which the action to avoid a collision is taken as much as possible is referred to as the check point CP2. Even in this case as well, the point at which the own ship 31 crosses right ahead the other vessel 32 is referred to as the check point CP3. However, if it is considered that an action of turning to avoid a collision is necessary, the vessel may continue to turn to starboard side and the check point CP3 may not occur.

The own ship 31 starts returning to the original course line as soon as the target is cleared at the check point CP4. When the position of the own ship returns to the original course line to set the course at the check point CP5, the collision avoidance maneuvering is completed.

Even in a situation in which the own ship 31 is overtaken, if it is considered that the overtaking does not take appropriate actions, the own ship abandons the action by stand-on vessel, and the action of the stand-on vessel and the action as will best aid to avoid collision are taken. In this case, the own ship 31 can temporarily avoid a collision by altering the course until its course is parallel to the course of the other vessel 32. After that, the own ship 31 takes the action of returning to the original course line after the other vessel 32, which is faster than the own ship 31, stands ahead of the own ship 31.

A scenario in a case where multiple other vessels 32 are present will be described with reference to FIG. 15 and FIG. 16. The collision avoidance actions taken in a case where multiple other vessels 32 are present depend on the system's ability to detect the other vessels 32 and the functional limits of the collision avoidance algorithm that proposes a collision avoidance route. A boundary line L1 indicates the limit of sensing and collision avoidance algorithm (collision avoidance plan establishment limit).

As shown in FIG. 15, when all other vessels 32 that are to be the targets of collision avoidance operations are within the detection distance and are subject to calculation of the collision avoidance algorithm, the collision avoidance operations are structured in a smooth flow at the stage from the check point CP1 to the check point CP5.

In contrast, as shown in FIG. 16, if there are the other vessels 32 that are the collision avoidance plan establishment limit or if the surrounding situations are changed due to the actions of the other vessels 32, the other vessels 32 are captured and recognized as calculation targets after the collision avoidance action starts at the check point CP1. Therefore, the collision avoidance route is calculated again during the collision avoidance action, additional avoidance actions occur, and the actions are repeated from the check point CP1. In such a situation, the user needs to understand the reliable range of the system and the state that the system has reconsidered. For this reason, the distance at which the system can detect the targets, the calculation target range of the collision avoidance algorithm, the targets that are to be targets of collision avoidance on the collision avoidance route, and the changes need to be displayed such that the user can understand them. For example, as shown in FIG. 15 and FIG. 16, a color of a target that is not included in the calculation may be displayed in a color (such as blue) that is not set in the COLREG phase.

Incidentally, for the scenarios shown in FIG. 12 to FIG. 16 as well, the practical description data 51 is converted into machine readable description data 52 by registering the description pairs of the practical description required for processing at each of the check points and the converted machine readable description in the conversion dictionary 53.

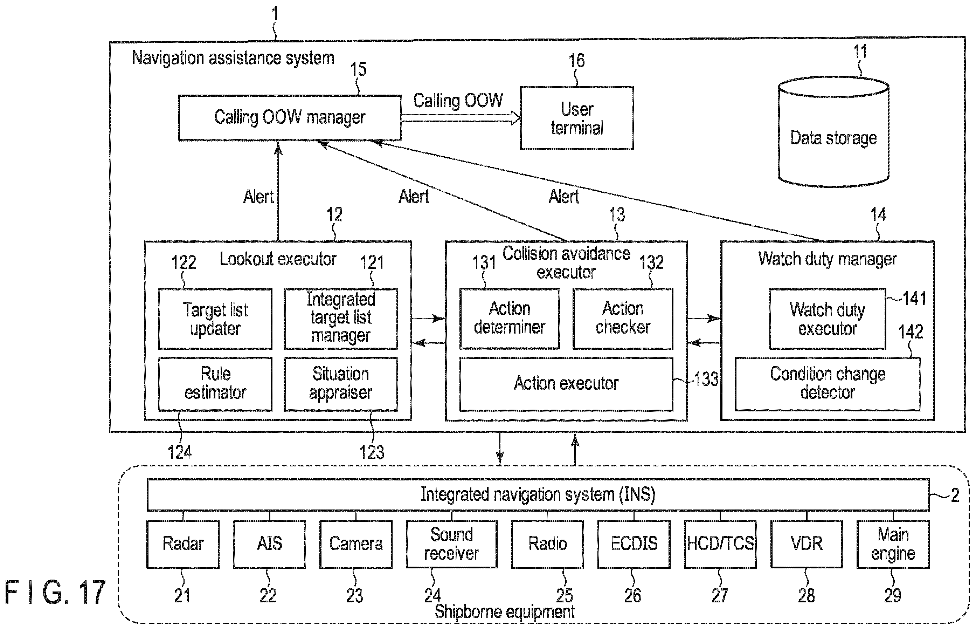

A configuration of the navigation assistance system 1 according to the present embodiment will be described with reference to FIG. 17. In the following descriptions, unless otherwise specified, the rules may be any rules such as, treaties such as COLREG and STCW, domestic laws and acts such as the Act on Preventing Collisions at Sea, Maritime Traffic Safety Act, Port Regulations Act, and Mariners Law, and unique rules of industry associations and various companies, or may be a combination of two or more rules.

For example, the navigation assistance system 1 supports the work performed by the seafarers. The navigation assistance system 1 is connected to an integrated navigation system (INS) 2. Incidentally, the navigation assistance system 1 may include any equipment, devices, systems, and the like implemented on the vessel to which the navigation assistance system 1 is applied. For example, the INS 2 may be a part of the system that constitutes the navigation assistance system 1. In this example, for convenience of explanation, the navigation assistance system 1 and the INS 2 will be described as separate systems.

The navigation assistance system 1 executes navigation operations performed by humans using the navigation equipment connected to the INS 2 as navigation assistance functions within the range of operational design domain (ODD) in which the system is set as the reliable range of operations. Incidentally, these functions are executed not only as additional functions of the INS 2, but may also be executed by other intermediate systems or may be executed based on data obtained directly from individual shipborne equipment.

For example, the navigation equipment connected to the INS 2 includes a radar 21, an AIS 22, a camera 23, a sound receiver 24, a radio 25, an electronic chart display and information system (ECDIS) 26, an autopilot 27, a voyage data recorder (VDR) 28, and the like. In addition, a main engine 29 and the like are connected to the INS 2. Navigation equipment information acquired from these navigation equipment is output from the INS 2 as navigation equipment data. Incidentally, devices not described here may be connected to the INS 2 or some of the devices described here may not be connected.

For example, the autopilot 27 includes a heading control system (HCS) or a track control system (TCS).

The VDR 28 is a device that records the vessel navigation data (position information, speed, main engine RPM, or the like), voice communication on the bridge, image data from the radar 21, image data from the ECDIS 26, and the like.

The ECDIS 26 may display information input by the user, in a layer (user layer), in addition to the electronic navigation chart (ENC). Information that is not recorded on the ENC but is essential for the vessel navigation may be displayed as lines, areas or character strings, in the user layer. The ECDIS 26 can automatically execute safety checks on the ENC and the user layer, based on various parameters set by the user and, at the same time, present visual information to humans. In the following descriptions, these functions may be collectively referred to as the ECDIS 26.

The navigation assistance system 1 is a computer system that is mainly composed of a computer. The computer comprises an arithmetic processing unit and a memory unit. The functions implemented in the navigation assistance system 1 are realized by the computer executing arithmetic processing according to a procedure such as programs stored in the memory unit. The computer system may be composed of any number of computers as long as it comprises at least one computer. The arithmetic processing unit may be composed of any type of hardware and may include any software. The memory unit may be composed of any number of storage media, and may be composed of any number of storage areas in the storage media. In addition, the various types of information stored in the memory unit do not need to be stored in such a manner that allows them to be clearly distinguished, and the names given to the information may be freely determined.

The navigation assistance system 1 comprises a data storage 11, a lookout executor 12, a collision avoidance executor 13, a watch duty manager 14, a calling OOW manager 15, and a user interface 16.

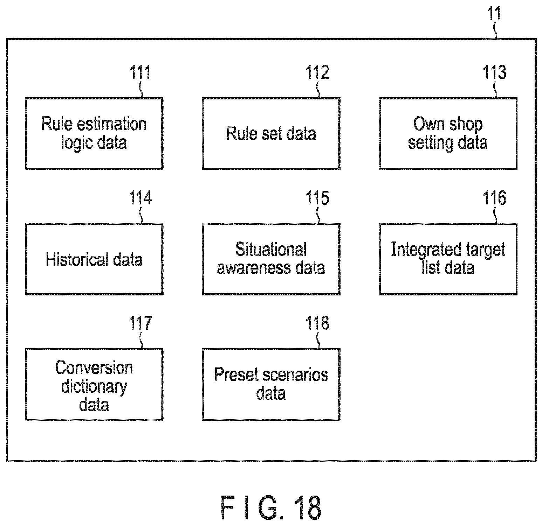

As shown in FIG. 18, the data storage 11 stores rule estimation logic data 111, rule set data 112, own ship setting data 113, historical data 114, situational awareness data 115, integrated target list data 116, conversion dictionary data 117, and preset scenario data 118. In addition to the above, the data storage 11 may also include data indicating any information. For example, the data storage 11 includes various data set by the user (hereinafter referred to as "user setting data"). The user setting data may include the above-described data and information. In the following descriptions, "information" refers to contents to be processed in the navigation assistance system 1, and "data" refers to data recorded in a medium in a format that can be processed in the navigation assistance system 1, but the information and the data can be arbitrarily converted into each other.

The rule estimation logic data 111 includes a rule estimation logic that indicates a procedure for estimating compliance with various rules applicable to the vessel navigation. The rule estimation logic is a machine readable program in a format that can be calculated by a computer.

For example, the rule estimation logic includes an applicable rule estimation logic and a rule-specific compliance check logic. The applicable rule estimation logic is a logic for estimating a rule applicable to the own ship 31 among multiple rules applicable to the vessel navigation. The rule-specific compliance check logic is a logic for checking whether or not the action state of the own ship 31 complies with the rules applicable to the own ship 31. Incidentally, the rule estimation logic is not limited to the configuration described here, but may be configured in any manner as long as the logic is configured to achieve a similar function.

The rule set data 112 is information that defines the relationship between the rule estimation logic and parameters defined in other information. For example, the parameters used in the rule estimation logic include various parameters included in the own ship setting data 113 and the situational awareness data 115.

The requirements qualitatively described in the various rules are defined as physical parameters such as distance, time, speed, or bearing. The rule set data 112 includes information by which the correspondence between the parameters used to specify the rules applicable depending on the situation and the parameters used to estimate the compliance with the specified rules, and the information included in the rule estimation logic data 111, the own ship setting data 113, and the situational awareness data 115. In addition, the rule set data 112 also includes, as parameters, rule application condition information including visibility information indicating the state of visibility around the own ship and water area information indicating the water area in which the own ship 31 navigates. The visibility information and water area information may be defined with terms used as practical standards, such as IMO Standard Marine Communication Phrases, or may be defined in a unique code system.

The own ship setting data 113 includes parameters that are set according to the characteristics of the own ship 31 used in the rule estimation logic included in the rule estimation logic data 111, and user call conditions that are conditions for the calling OOW manager 15 to execute calling OOW. For example, the own ship setting data 113 includes information on the navigation equipment data of the own ship 31, the condition of the own ship 31, maneuverability, navigation area, traffic density of vessels, instructions in the operation manual, and the like, and may include any information that a human use to make determination according to the situation. For example, the own ship setting data 113 is appropriately set by a user (for example, a seafarer). Data based on the unique characteristics of the own ship, such as the size, type, maneuverability, and the like of the own ship 31, may be set by the user or may be registered in advance as the own ship setting data 113.

The historical data 114 includes an integrated target list and a history of actions of the own ship.

The situational awareness data 115 is data generated by a situation appraiser 123, based on the navigation equipment data acquired from the INS 2, as data indicating situational awareness information required for processing in the collision avoidance executor 13, the watch duty manager 14, the integrated target list manager 121, the target list updater 122, and the rule estimator 124. The situational awareness information is information required by STCW, including, for example, lookouts provided in COLREG, and is information that seafarers need to check during the vessel navigation. In the present embodiment, the information means the situation of the own ship 31 required to determine the action of the own ship. The situational awareness data 115 is generated by referring to various parameters used in the rule estimation logic data 111, the rule set data 112, and the own ship setting data 113.

The integrated target list data 116 is the data that stores the integrated target list.

The conversion dictionary data 117 is a conversion engine used in the process of converting the preset scenarios from practical descriptions to machine readable descriptions, as shown in FIG. 5 to FIG. 16. For example, the conversion dictionary data 117 includes data in which the practical descriptions and the machine readable descriptions are stored as the description pairs. The description rules for the machine readable descriptions may be in any format as long as the descriptions can be processed by the collision avoidance executor 13, and are set appropriately according to the programming language adopted in the navigation assistance system 1. In addition, the description rules do not necessarily need to be stored as a fixedly corresponding language pair and may be a conversion engine using Artificial Intelligence (AI) that is confirmed to be sufficiently reliable.

As shown in FIG. 4, the preset scenario data 118 includes one or more conditions for determining the decision of actions of the own ship, and includes data in which the actions of the own ship according to the situation is preset for each of the multiple defined check points. The number of scenarios set in the preset scenario data 118 is not limited. The information for defining the situation for selecting the scenario to be applied may be any data that can be handled in the situational awareness data 115. In addition, the data in which the actions of the own ship are set may be any data that can be processed by the collision avoidance executor 13, and may correspond to at least one of the practical description and the machine readable description. If the data is stored as the practical description, it may be converted to a machine readable description using the conversion dictionary data 117 as a process in the collision avoidance executor 13. If the data is stored as the machine readable description, the practical description input by the user when setting the scenarios is converted into a machine readable description using the conversion dictionary data 117 and is stored in the preset scenario data 118. In addition, even if the data is stored as both the practical description and the machine readable description, if the configuration does not comprise the conversion dictionary data 117, or if an exceptional description pair which is not stored in the conversion dictionary data 117 needs to be used, the preset scenario data 118 can be created.

The lookout executor 12 performs calculations for automatically keep watch over the own ship 31. The lookout executor 12 comprises the integrated target list manager 121, the target list updater 122, the situation appraiser 123, and the rule estimator 124.

The integrated target list manager 121 integrates the target data acquired as the navigation equipment data from multiple devices including the navigation equipment, and records and manages the integrated target list data 116 to which additional information is further added, in the data storage 11.

The target list updater 122 generates additional information based on the rule set data 112, the own ship setting data 113, and the navigation equipment data acquired from the INS 2, and updates the current values of the integrated target list data 116. Furthermore, user setting data including information that is set by the user in the ECDIS 26, and lines, areas, and character string information created on the user layer may be used. In addition, the target list updater 122 also updates the history of the integrated target list stored in the historical data 114.

The situation appraiser 123 acquires from the INS 2, as the navigation equipment data, the own ship data indicating information on the state of the own ship 31, the target data indicating the information on the state of targets including the other vessels 32, and the surrounding data indicating surrounding information on the situation around the own ship including the sea areas and disturbances. The situation appraiser 123 generates the situational awareness data 115, based on the various acquired data, the own ship setting data 113, and the rule set data 112. The own ship data and the target data include information such as the position, heading, and speed. The situational awareness data 115 is data indicating the determination of the situation that is mainly required by the lookout (Rule 5) and the risk of collision (Rule 7).

The rule estimator 124 acquires parameters that are the rule application determination factors from the own ship setting data 113, based on the relative relationship between the own ship 31 and the target, which is specified from the situational awareness data 115. The rule estimator 124 estimates rules applicable to the own ship 31 from among the multiple rules applicable to the vessel navigation, according to the rule estimation logic stored in the rule estimation logic data 111, by using the acquired rule application determination factors. The number of rule estimation logics stored in the rule estimation logic data 111 is not limited to one, but may be multiple.

The collision avoidance executor 13 executes calculations to automatically execute collision avoidance. The collision avoidance executor 13 includes an action determiner 131, an action checker 132, and an action executor 133.

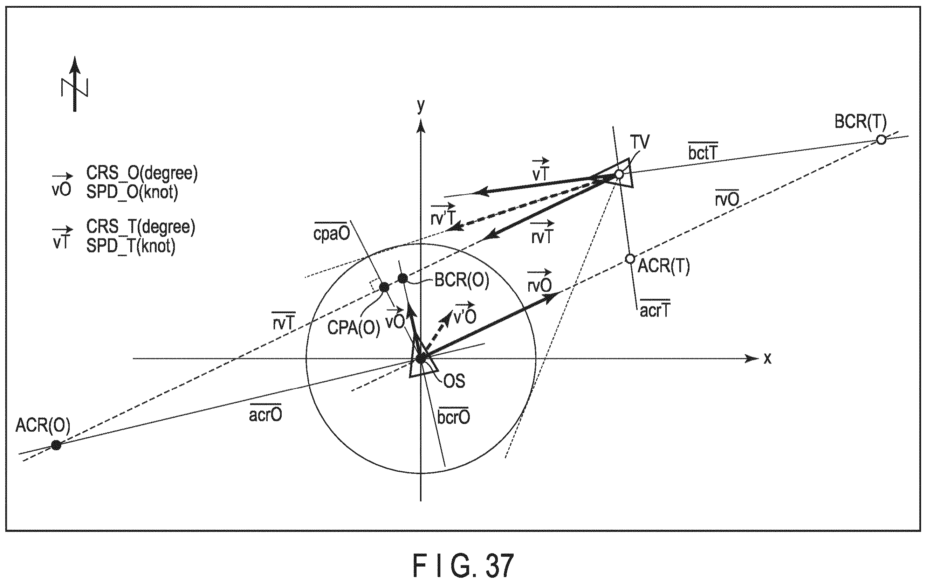

The action determiner 131 decides the actions of the own ship to avoid a collision, based on the situational awareness data 115 and the integrated target list data 116. The collision avoidance algorithm used in determination of actions of the own ship may be a calculation method using the relative vectors between the own ship 31 and the other vessel 32 as shown in FIG. 37 or a method of calculating a route to avoid existing dangerous areas. Alternatively, the action determiner 131 may decide any operation of the own ship 31. For example, the action determiner 131 may calculate and obtain actions for the own ship 31 to automatically navigate toward the destination in a situation where all rules are not applied.

The action checker 132 checks the compliance of the actions created by the action determiner 131 with the rules for actions of the own ship by referring to the rule estimation logic data 111, the rule set data 112, the own ship setting data 113, the situational awareness data 115, and the integrated target list data 116. Incidentally, the action checker 132 may check the compliance with the determined rules if the rules applicable to the own ship 31 are fixed, and may check the compliance with common rules that are applicable regardless of the situation of the own ship 31 if the rules applicable to the own ship 31 are not fixed.

Incidentally, the action checker 132 may execute the compliance check for any actions of the own ship in relation to an action plan or actions which are being executed, such as the actions manually executed by the seafarers, actions input from the outside of the navigation assistance system 1, or actions which are being executed, in addition to the actions determined by the action determiner 131. The rule-specific compliance check logic stored in the rule estimation logic data 111 may be used for the compliance check.

The action executor 133 executes actions which are subjected to the compliance check by the action checker 132 or actions which are not required to be subjected to the compliance check. For example, the action executor 133 outputs a control command to execute actions to the autopilot 27, and the like.

The watch duty manager 14 executes calculations to automatically manage the watch duty. The watch duty manager 14 comprises a watch duty executor 141 and a condition change detector 142.

The watch duty executor 141 executes a duty that can be automated among duties to be executed by a navigational watch, a radio watch, an officer of the watch (OOW), or the like. For example, the duties executed by the watch duty executor 141 include paying attention to changes in the surrounding conditions such as water areas, weather and sea conditions, and navigation warnings, checking the ship position using multiple methods, response to distress, and the like, and duties other than the lookout and actions for avoid collisions.

The condition change detector 142 comprises a function of detecting conditions that the duty automatically executed by the watch duty executor 141 exceeds the ODD set by the user as a reliable range of duty, and outputs a warning when the duty exceeds the ODD. As the ODD, for example, the weather and sea conditions, the range of visibility, and the like may be set as numerical standards for each device connected to the INS 2, or the performance of the hardware or software of the device required for execution of the collision avoidance, such as the auto target tracking of the radar 21 and the image recognition function using the data acquired by the camera 23, may be set as the standard.

In the regulations of STCW, events in a case where "the officer in charge of the navigational watch shall notify the master immediately", such as "if restricted visibility is encountered or expected", "if the traffic conditions or the movements of other ships 32 are causing concern", "if difficulty is experienced in maintaining course", and "on failure to sight land, a navigation mark or to obtain soundings by the expected time" are listed (STCW code Part A Chapter viii Rule 40). In addition, some vessel management companies have provisions for reporting to the master via SMS.

Such a report to the master is referred to as calling Master. If such an event occurs, it is predicted that the reliability of the automatic driving control by the lookout executor 12, the collision avoidance executor 13, and the like may be lowered. If such an event occurs, the navigation assistance system 1 issues a report to call the user, i.e., officer of the watch (hereinafter referred to as "Calling OOW"). The condition change detector 142 automatically detects a change in the situation that requires calling OOW.

When the change in situation of calling OOW is detected by the condition change detector 142, the calling OOW manager 15 notifies the user if the calling user conditions stored in the own ship setting data 113 are met. In addition, the calling OOW manager 15 also notifies the user if a flag indicating that the calling OOW conditions in the integrated target list have been met is turned on. Notification to the user may be executed in any manner. For example, the notification to the user may be displayed on a display or the like, or the user may be notified by light, sound, vibration, or the like. Alternatively, notification to the user may also be achieved by the user terminal 16.

The user terminal 16 is a portable terminal mainly composed of a computer for the users to use various functions of the navigation assistance system 1. The user terminal 16 presents information on the navigation assistance system 1, such as calling OOW, to users such as OOW. The user terminal 16 may implement any function of the navigation assistance system 1 and may display any information. This series of notifications and the user's response after the notification are assumed to be provided in the SMS.

For example, the navigation assistance system 1 comprises the situation appraiser 123 that generates the situational awareness data 115 indicating the surrounding situations including the own ship 31 and the target, the data storage 11, the target list updater 122, and the action checker 132. The data storage 11 stores the rule estimation logic data 111 in which a process for estimating the compliance with the rules applicable to the vessel navigation is defined, the rule set data 112 in which the correspondence with the situational awareness data 115 is defined, and the own ship setting data 113 in which the own ship unique information used for the action determination according to the navigation state of the vessels is set as a parameter.

The target list updater 122 updates the integrated target list. The integrated target list is a list for managing the information of each target whose situation is determined by the situation appraiser 123 by adding additional information used in the processing in the rule estimation logic based on the own ship setting data 113.

The action checker 132 checks compliance of the input action of the own ship 31 with the rules, based on the rule set data 112 and the integrated target list.

Accordingly, the navigation assistance system 1 can present the actions and the reasons for those determinations corresponding to various rules and the own ship settings that are applicable to the vessel navigation.

In addition, if it can be determined that the automatic control of the navigation assistance system 1 is within the ODD range set as a reliable range, the navigation assistance system 1 allows the lookout executor 12 to automatically execute lookout, and the collision avoidance executor 13 can automatically take actions to avoid a collision, based on the execution of the lookout executor 12.

Furthermore, if it can be determined that various watch duties other than actions to avoid collisions are within the ODD range, the watch duty executor 141 can automatically execute navigational watch duties.

If any one of the lookout executor 12, the collision avoidance executor 13, and the watch duty executor 141 detects that the actions exceed the ODD range, the calling OOW manager 15 outputs a signal to notify the user of an alert, and the like. The OOW can grasp that a situation requiring a response of the OOW has arisen at any place on the vessel, by allowing the carried user terminal 16 to be notified of display of calling OOW, or the like. For example, under the rules of the STCW, making the bridge not unmanned under any circumstances is a requirement for the watch duty system (STCW code Part A Chapter viii Rule 18.1). By carrying the user terminal 16, the OOW can become an alternative means for enabling temporarily leaving the bridge to be carried out.

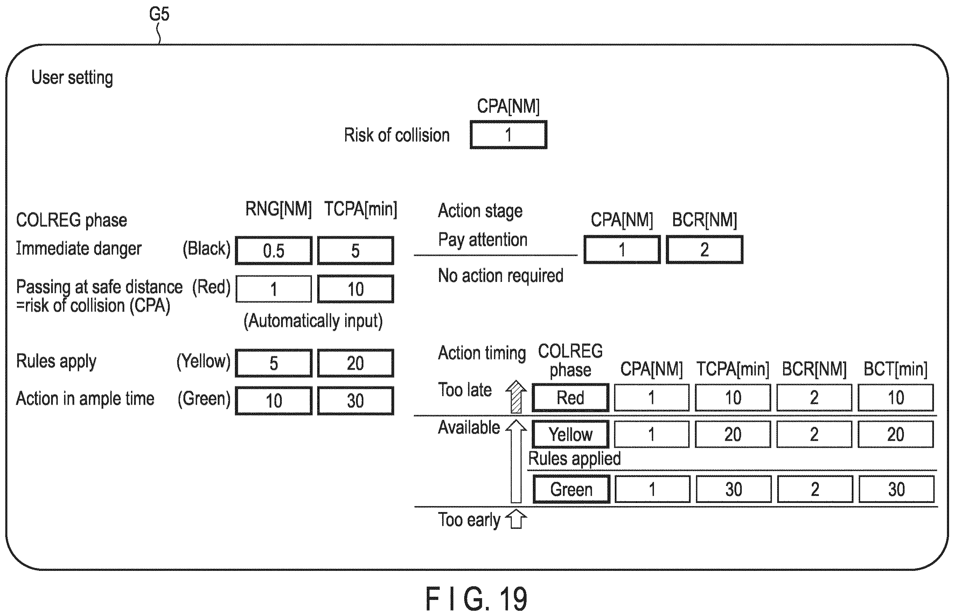

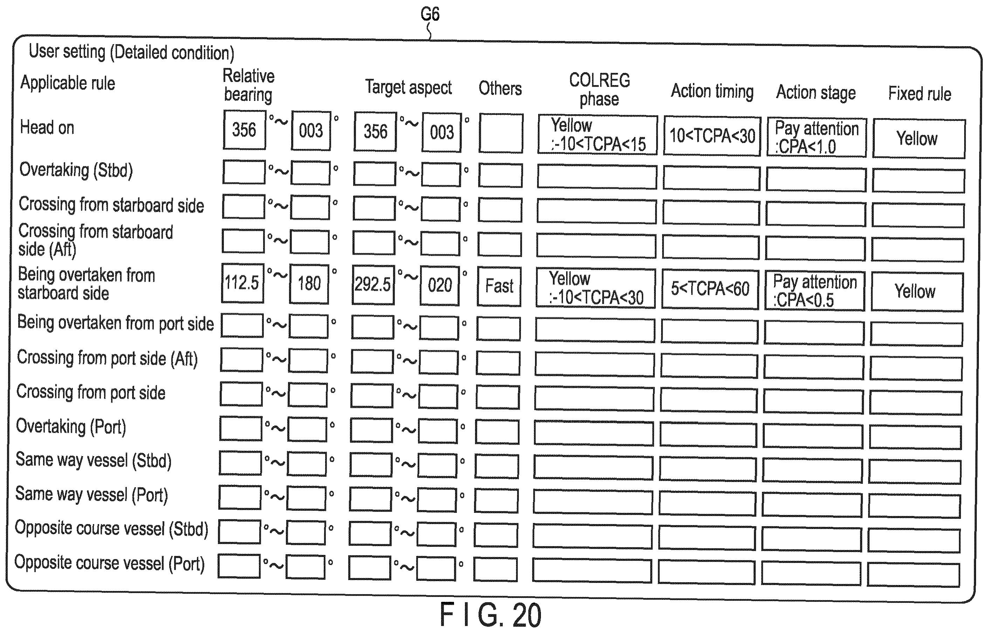

Screens G5 and G6 that allow the user displayed on the user terminal 16 to set the rule set data will be described with reference to FIG. 19 and FIG. 20. Incidentally, the screens G5 and G6 described here are merely examples, and any screen may be displayed on the user terminal 16.

The distance is measured in nautical miles (NM), and the time is measured in minutes. The data which is input by the user is set in the data storage 11 as the rule set data 112 and the own ship setting data 113. For example, a user such as a master, an officer, a seafarer, or the like sets in the navigation assistance system 1 set values for determining the application of rules, using the user terminal 16. More specifically, the user sets various parameters according to the condition of the own ship 31, maneuverability, navigation area, surrounding conditions, traffic density of vessels, the navigation manual, and the like. Set values for the risk of collision are input with numerical values, as the CPA, BCR, and other parameters used by the user for determination.

Items of the COLREG phase on screen G5 include input fields for inputting the set values of each of range (RNG) and TCPA as parameters to be input. Incidentally, some set values may be automatically input to the input fields. For example, in the navigation of a general merchant vessel, CPA, which is set as the occurrence of a risk of collision, is used as the criterion for determining that the distance is less than the safe passing distance. Therefore, on screen G5, CPA may be automatically input to the set value for red determination as the distance less than the safe passing distance or may be input manually by the user.

The items of the action stage on the screen G5 include input fields for inputting the set value for switching the stages of "no action required" and "pay attention". The CPA and the BCR are input to the input fields as parameters.

The items of the action timing on the screen G5 include input fields for inputting setting values for switching the stages of "too early", "available", and "too late". The COLREG phase, CPA, TCPA, BCR, and BCT are input to the input fields as parameters for each action timing. A set value for determining application of the rules of CORLEG is further input to the input field of the "available" stage.

The values that are desirably made to match the set values set in the items of the COLREG phase or the action stage may be automatically input or may be made to be directly input if changes are required.

Incidentally, the items and the input parameters described here, and the like are mere examples and may be changed as desired or any input fields may be set to allow automatic input or individual input. In addition, a function of checking whether or not there are any inconsistencies in distance or time for multiple input values may also be provided. The navigation assistance system 1 may automatically calculate the set values from the values input by the user, based on the data on the vessel maneuverability, sea area, and the like.

For example, as shown in screen G6 in FIG. 20, detailed conditions may be able to be input to the user setting screen. In this example, conditions for determining the relative bearing, the target aspect, the other conditions, the CORLEG phase, the action stage, the action timing, and the fixed rule, can be input for each applicable rule. The conditions may be input by selecting the parameters or logical symbols to be used using a drop-down list, or by inputting text of any logical expression.

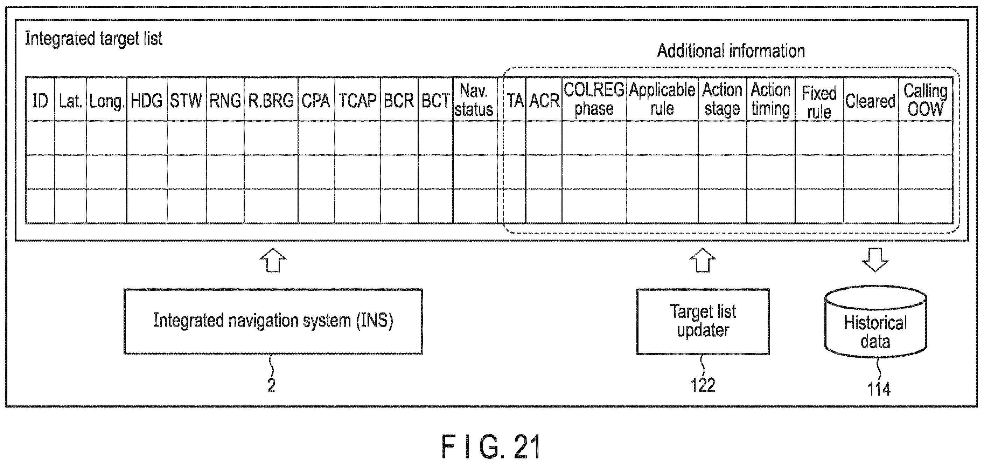

The integrated target list will be described with reference to FIG. 21.

The integrated target list data 116 is a list for systematically observing and managing current information on the targets including the other vessels 32 detected by the INS 2, for each target. All target information included in the integrated target list data 116 is recorded in the historical data 114.

The data used to create the integrated target list data 116 is acquired by shipborne equipment. The navigation assistance system 1 acquires the data via the INS 2. For example, the data items managed in the integrated target list data 116 are as follows:
The item "ID" is a number or vessel name that identifies the target.
The item "Lat." indicates the latitude.
The item "Lon." indicates the longitude.
The item "HDG" indicates the heading.
The item "STW" indicates the speed through water.
The item "RNG" indicates the range.
The item "R.BRG" indicates the relative bearing.
The item "CPA" indicates the closest point of approach.
The item "TCAP" indicates the time to the closest point of approach.
The item "BCR" indicates the bow crossing range.
The item "BCT" indicates the bow crossing time.
The item "Nav.Status" indicates the navigational status.
These items are the target data included in the navigation equipment data obtained from the INS 2.

The items "Target Aspect (TA)", "ACR", "COLREG Phase", "Applicable Rule", "Action Stage", "Action Timing", "Fixed Rule", "Cleared", and "Calling OOW" are additional information data calculated as the above-described additional information by the target list updater 122 of the lookout executor 12. Incidentally, "ACR" indicates the Abeam Crossing Range (ACR), which is the point crossing a straight line indicating a beam of the own ship 31. In addition, own ship data indicating own ship information is also output from the navigation equipment data.

The time it takes for the own ship 31 to reach each of the specified points, including the point at which the own ship 31 and the target are closest to each other, the point at which the target crosses the bow of the own ship 31, and the point at which the target crosses the beam of the own ship 31 (TCPA, BCT, ACT, etc.), and the distance between the own ship 31 and the target at these specified points (CPA, BCR, ACR, etc.), among the data items managed in the integrated target list data 116, are treated as parameters of estimated values based on current values.

In a real environment, the calculation result may fluctuate around the set value due to fluctuation in the own ship 31 and fluctuation in the other vessels 32 and, as a result, it is assumed that the determination may change frequently. In such cases, the determination result for that item may use the average value over a certain period of time, or the like.

In addition, if the reliability of the information on the other vessels 32 is questionable based on numerical continuity and the like or if actions of the other vessels 32 are unnatural, the data contents of the integrated target list may not be trustworthy as they are. In such a case, calling OOW may be executed. In this case, the item "Calling OOW" is turned on. For example, turning on the item "Calling OOW" means setting a flag indicating the execution of calling OOW (for example, changing a variable from "0" to "1").

For example, the integrated target list is data structured in a table format for calculations in the navigation assistance system 1, and some elements of the information in the integrated target list may not be displayed to the user.

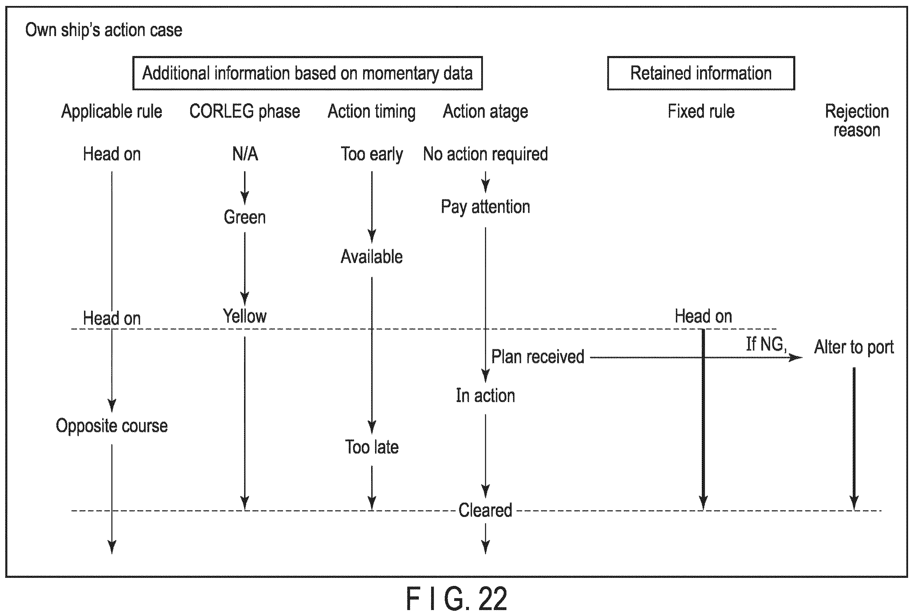

Next, the fixed rules will be described with reference to FIG. 22. The integrated target list is updated each time momentary data is acquired from the INS 2, and the additional information is also generated based on the momentary data.

In COLREG, once the rules to be applied are fixed, the rules to be applied due to successive changes in the relative relationship between the own ship 31 and the other vessels 32 based on collision avoidance actions are not changed. Therefore, in the present embodiment, the applicable rules are considered to be fixed when the "COLREG phase" becomes "yellow". The fixed rules, which are the fixed applicable rules, are recorded as retained information in the integrated target list.

FIG. 22 shows a state in which the relative relationship with the other vessel 32 changes as a result of the action of the own ship 31. The additional information based on momentary data includes change over time in the applicable rule, the COLREG phase, the action timing, and the action stage. The retained information includes change over time in the fixed rule. In this example, the state in which the applicable rule is "Head on", the COLREG phase is not applicable (N/A: Not Applicable), the action timing is "Too early", and the action stage is "No action required", is displayed.

After that, when the COLREG phase becomes "Yellow" and the rule is fixed as "Head on", the fixed rule is recorded in the retained information as "head-on". After that, the applicable rule determined by the momentary data as the own ship 31 takes actions is an "Opposite course vessel", but the fixed rule is held as "Head on". Then, the action stage changes to "In action" by the target list updater 122 receiving an action plan from the action determiner 131. However, if the action received from the action determiner 131 is turning to port, which is prohibited by COLREG, the action is rejected by the action checker 132 and "turn to port" is presented as the rejection reason. If the plan is turning to starboard, the action is approved by the action checker 132, and the action stage remains "In action" until the action meets the cleared conditions. In addition, even if the action timing becomes "Too late" according to the determination based on the momentary data, "Calling OOW" is not required since the action stage is already "In action".

Thus, during the period in which the applicable rule is considered to be fixed based on the additional information, the information is retained as the fixed rule in the integrated target list, regardless of the applicable rule calculated as the momentary data. Therefore, it is possible to determine the compliance of COLREG with respect to the collision avoidance actions once the applicable rule is fixed.

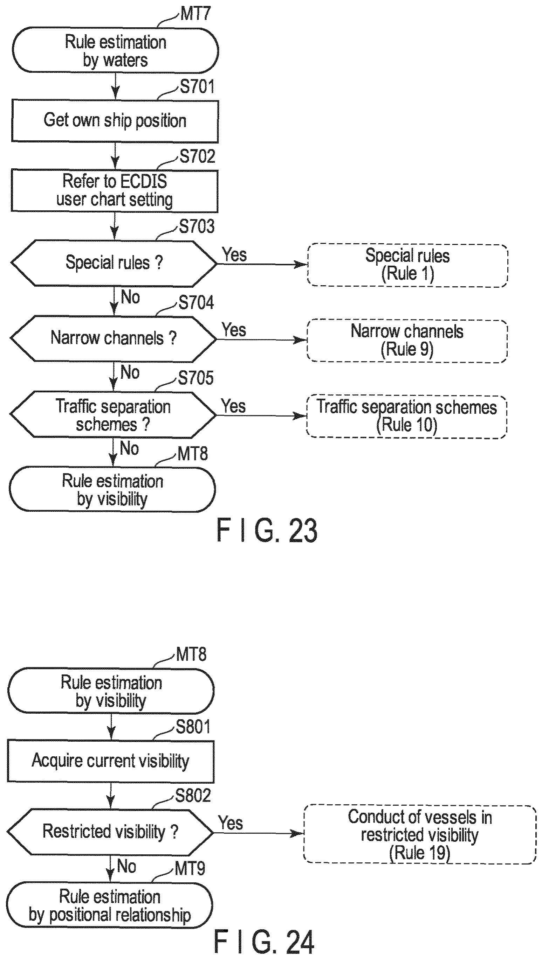

Procedures of the rule estimation logic that estimates the rules applicable to the own ship 31 will be described with reference to FIG. 23 to FIG. 26.

Determination results represented by dotted lines in the figures indicate that there are rules that need to comply during the vessel navigation and that the parameters for determining specific actions are not registered in the rule set.

Regarding the rules for which the rule set is not registered, the action checker 132 cannot check the compliance of the action of the other vessel 32 with the rules. In this case, the action checker 132 executes the determination of the applicable rule in the integrated target list, but turns on the item "Calling OOW" and suspends the processing.

The rules that are applied to the vessel navigation include descriptions that can be interpreted as physical parameters such as the distance, the time, and the bearing, as well as descriptions which are vague similarly to human intuition. Therefore, regarding the rules that are difficult to register as a rule set, such as the rules that are difficult to describe using physical parameters and the rules that are applied to specific water areas and time, the navigation assistance system 1 is configured to only identify which rules are generally applicable, and to leave specific responses to humans.

Regarding the rule determinations represented by solid lines, a rule set for the action checker 132 to check the actions of the other vessel 32 is registered in the rule set data 112.

A procedure of rule estimation MT7 based on water areas will be described with reference to FIG. 23.

The navigation assistance system 1 acquires the position information of the own ship 31 (step S701), and refers to a boundary line and the like set by the user of the ECDIS 26 (step S702). If the own ship 31 is located in a water area to which special rules is applied, "special rule (Rule 1(b))" is set in the applicable rule item (Yes in step S703).

If the own ship 31 is located in a water area where special rules are not applied and the rules for narrow channels are applied, "Narrow channels (Rule 9)" is set in the applicable rule item (Yes in step S704).

If the own ship 31 is located in a water area where the rules for narrow channels are not applied but rules for traffic separation schemes are applied, "Traffic separation schemes (Rule 10)" is set in the applicable rule item (Yes in step S705).

If none of the water area-based rules are applied, the navigation assistance system 1 proceeds to visibility-based rule estimation MT8 (No in step S705).

A procedure of the visibility-based rule estimation MT8 will be described with reference to FIG. 24.

The navigation assistance system 1 acquires a current state of visibility (step S801). If the navigation assistance system 1 determines that the visibility is restricted, the system sets "Conduct of vessels in restricted visibility (Rule 19)" to the applicable rule item (Yes in step S802).

The navigation assistance system 1 determines the visibility from, for example, a visibility meter, images captured by a camera, or the like. In addition, since humans recognize the situation such as "X miles to the rain area", by the rain area captured by an X-band radar, the navigation assistance system 1 may determine the state of visibility by combining the radar echoes of rain and snow reflections with camera images.

If the visibility is not restricted, the navigation assistance system 1 proceeds to rule estimation MT9 based on the positional relationship between the own ship 31 and the other vessels 32 (No in step S802).

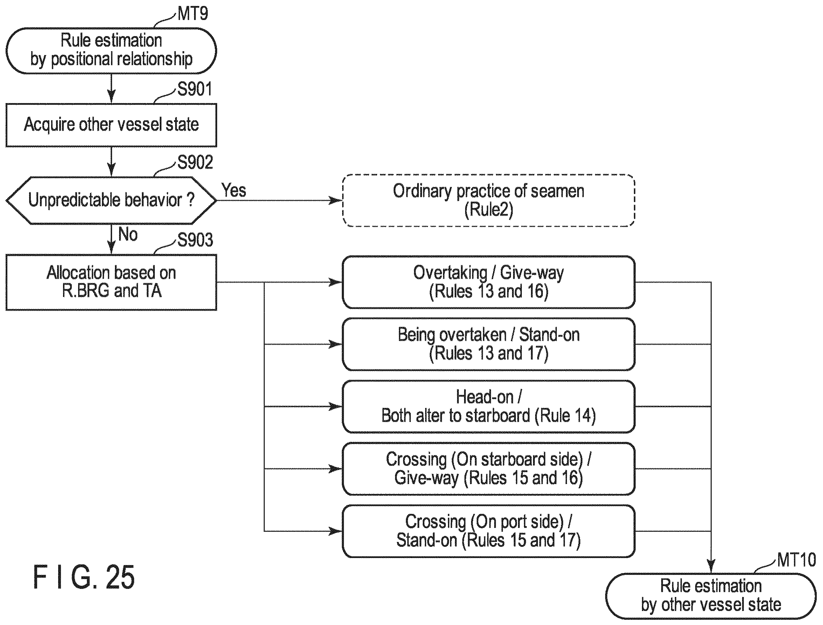

A procedure of rule estimation MT9 based on the positional relationship will be described with reference to FIG. 25.

The navigation assistance system 1 acquires data for grasping the state of the other vessel 32 that is considered as the target (step S901) and, if determining that the other vessel 32 is making or is likely to make an unpredictable behavior, sets "ordinary practice of seamen (Rule 2)" to the applicable rule item (Yes in step S902). The unpredictable behavior may be determined from continuous observation of the actions of the other vessel 32, the vessel type, or the like. Since it can be predicted depending on the vessel type that the other vessel 32 may make an unpredictable behavior or that a voice call may be received from the other vessel 32, "ordinary practice of seamen (Rule 2)" is set at the stage of detecting the presence of the vessel type near the course of the own ship 31.

If the navigation assistance system 1 determines that the other vessel 32 does not make an unpredictable behavior, the system sets one of "Overtaking/Give-way (Rule 13 and 16)", "Being overtaken/Stand-on (Rule 13 and 17)", "Head-on situation/Both actions (Rule 14)", "Crossing situation (on starboard side)/Giver-way (Rule 8, 15, and 16)", and "Crossing situation (on port side)/Stand-on (Rule 15 and 17)", to the applicable rule item, based on the correspondence between the relative heading and the target aspect registered in the rule set (No in step S902, and step S903). After that, the navigation assistance system 1 proceeds to rule estimation MT10 based on the other vessel state.

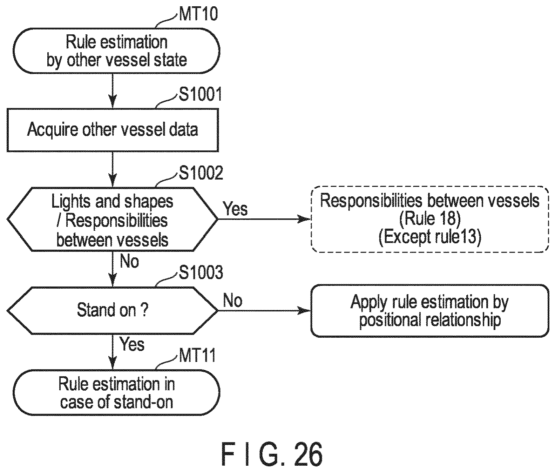

A procedure of rule estimation MT10 based on the other vessel state will be described with reference to FIG. 26.

The navigation assistance system 1 acquires data on the vessel 32 that is considered as the target (step S1001). If the navigation assistance system 1 determines that the other vessel 32 is displaying lights and shapes different from those of the power-driven vessel during navigation or corresponds to responsibilities between vessels (Rule 18), the system sets "Responsibilities between vessels (Rule 18) (Except Rule 13)" to the applicable rule item (Yes in step S1002).

If the other vessel 32 does not meet these and if "Being overtaken/Stand-on (Rule 13 and 17)" or "Crossing situation (on port side)/Stand-on (Rule 15 and 17)" is not set in the applicable rule item, the navigation assistance system 1 maintains the applicable rule set in the rule estimation MT9 based on the positional relationship (No in step S1003) and, if "Being overtaken/Stand-on (Rule 13 and 17)" or "Crossing situation (on port side)/Stand-on (Rule 15 and 17)" is set, the navigation assistance system 1 proceeds to rule estimation MT11 in a case of a stand-on vessel (Yes in step S1003).

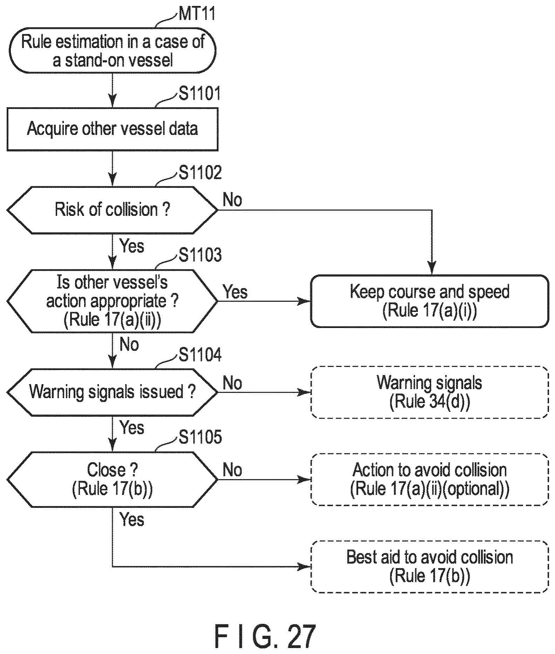

A procedure of rule estimation MT11 in a case of a stand-on vessel will be described with reference to FIG. 27.

The navigation assistance system 1 acquires the data on the other vessel 32 that is considered as the target (step S1101) and, if there is no risk of collision or the actions of the other vessel 32 are appropriate, sets "Keep course and speed (Rule 17(a) (i))" to the applicable rule item (No in step S1102 and Yes in step S1103).

If a warning signal required when there is doubt as to whether the other vessel 32 has taken sufficient action to avoid a collision is not executed, the navigation assistance system 1 sets "Warning signals (Rule 34(d))" to the applicable rule item (No in step S1104). If a warning signal is executed, the navigation assistance system 1 determines whether or not it is recognized that a collision with the give-way vessel cannot be avoided by the actions of the give-way vessel alone since the give-way vessel approaches too close to the own ship 31 (Step S1105). If the other vessel does not meet the conditions, the navigation assistance system 1 sets "Action to avoid collision (Rule 17(a) (ii) (optional))" in the applicable rule item (No in step S1105) and, if the other vessel meets the conditions, the navigation assistance system 1 sets "Best aid to avoid collision (Rule 17(b))" to the applicable rule item (Yes in step S1105).

The above are the processes for determining the applicable rules. Incidentally, the notation of the determination results indicated in the above descriptions is merely an example, and any notation can be used as long as the applicable rules and actions can be identified, and symbols such as ID may also be used.

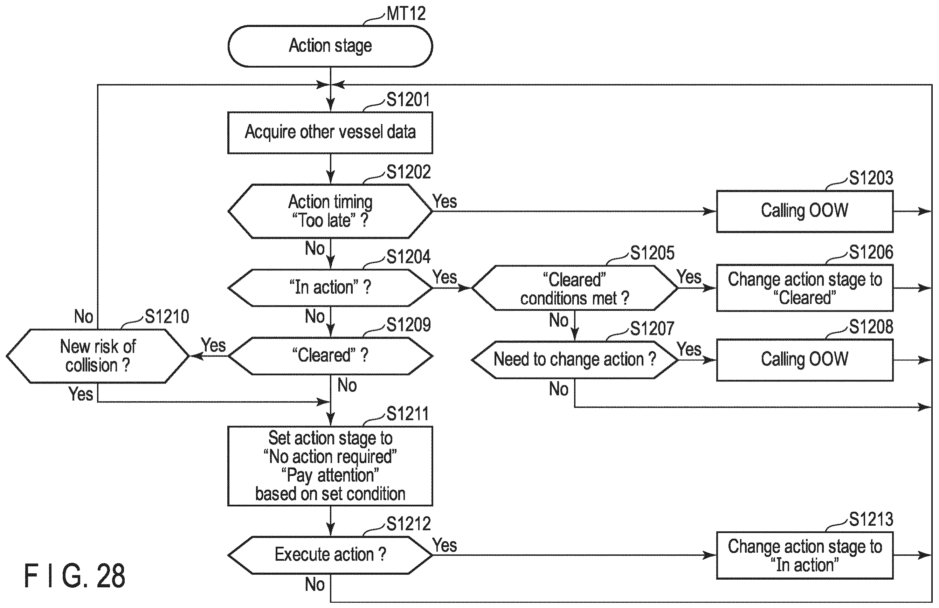

A procedure of action stage determination MT12 for determining the action stage of the own ship 31 will be described with reference to FIG. 28.

The navigation assistance system 1 acquires the data on the other vessel 32 that is considered as the target (step S1201) and, if "Too late" is set in the action timing item, turns on the item "Calling OOW" and returns to the initial processing (Yes in step S1202, and step S1203).

If determining that "In action" is set in the action stage item and that the conditions for "Cleared" are met, the navigation assistance system 1 changes the action stage item to "Cleared" and returns to the initial process (Yes in step S1204, Yes in step S1205, and step S1206). In contrast, if determining that the conditions for "Cleared" are not met and detecting a situation requiring some changes in actions, the navigation assistance system 1 turns on the item "Calling OOW" and returns to the initial process (No in step S1205, Yes in step S1207, and step S1208).

If determining that "Cleared" is set in the action stage item and that there is no new risk of collision, the navigation assistance system 1 returns to the initial process and does not change the action stage item (Yes in step S1209, No in step S1210). In contrast, if the navigation assistance system 1 determines that there is a new risk of collision or if "Cleared" is not set in the action stage item, the system sets either "No action required" or "Pay attention" to the action stage item according to the set conditions (No in step S1209, Yes in step S1210, and step S1211).

Next, the navigation assistance system 1 sets the action stage item to "In action" and returns to the initial process if an action is being performed (Yes in step S1212, and step S1213) or returns to the initial process without changing the action stage item if an action is not being performed (No in step S1212).

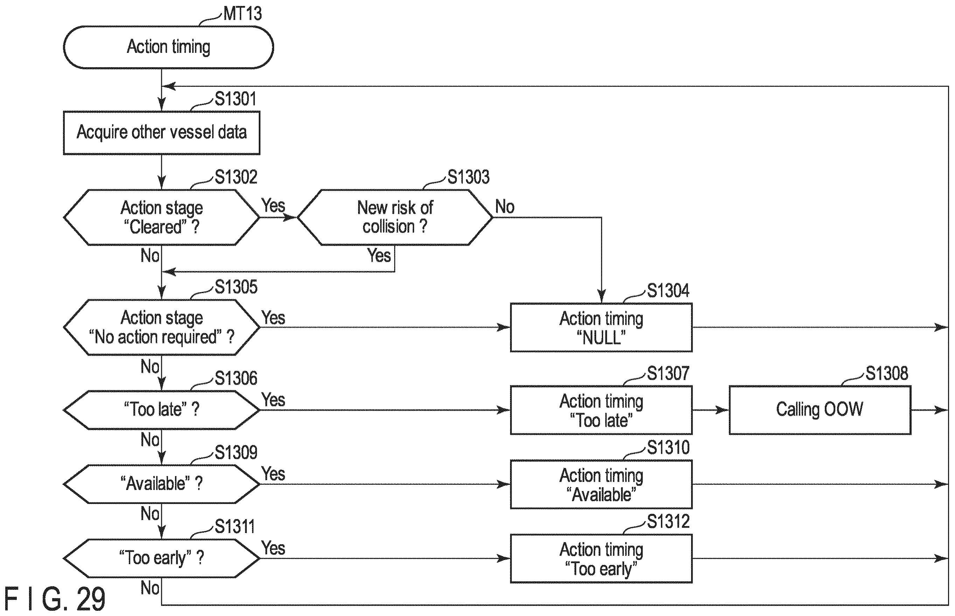

A procedure of action timing determination MT13 for determining the action timing of the own ship 31 will be described with reference to FIG. 29.

The navigation assistance system 1 acquires data on the vessel 32 that is considered as the target (step S1301). If determining that "Cleared" is set in the action stage item and that there is no risk of a new collision, the navigation assistance system 1 sets "NULL" to the action timing item (Yes in step S1302, No in step S1303, and step S1304). The "NULL" in the action timing item means that no action timing is to be determined since no action is required.

If the navigation assistance system 1 determines that there is a new risk of collision and that "No action required" is set in the action stage item, the system sets "NULL" to the action timing item (Yes in step S1303, Yes in step S1305, and step S1304).

If "Cleared" is not set in the action stage item and "No action required" is set in the action stage item, the navigation assistance system 1 sets "NULL" to the action timing item (No in step S1302, Yes in step S1305, and step S1304).

If "No action required" is not set to the action stage item, the navigation assistance system 1 determines whether or not the preset requirements for determining "Too late" are met (No in step S1305, and step S1306). If determining that the requirements for determining "Too late" are met, the navigation assistance system 1 sets "Too late" to the action timing item, turns on the item "Calling OOW", and returns to the initial process (Yes in step S1306, steps S1307, and step S1308).

If determining that the requirements for determining "Too late" are not met, the navigation assistance system 1 determines whether or not the preset requirements for determining "Available" are met (No in step S1306, and step S1309). If determining that the requirements for determining "Available" are met, the navigation assistance system 1 sets "Available" to the action timing item, and returns to the initial process (Yes in step S1309, and step S1310).

If determining that the requirements for determining "Available" are not met, the navigation assistance system 1 determines whether or not the preset requirements for determining "Too early" are met (No in step S1309, and step S1311). If determining that the requirements for determining "Too early" are met, the navigation assistance system 1 sets "Too early" to the action timing item, and returns to the initial process (Yes in step S1311, and step S1312). If determining that the requirements for determining "Too early" are not met, the navigation assistance system 1 returns to the initial process (No in step S1311).

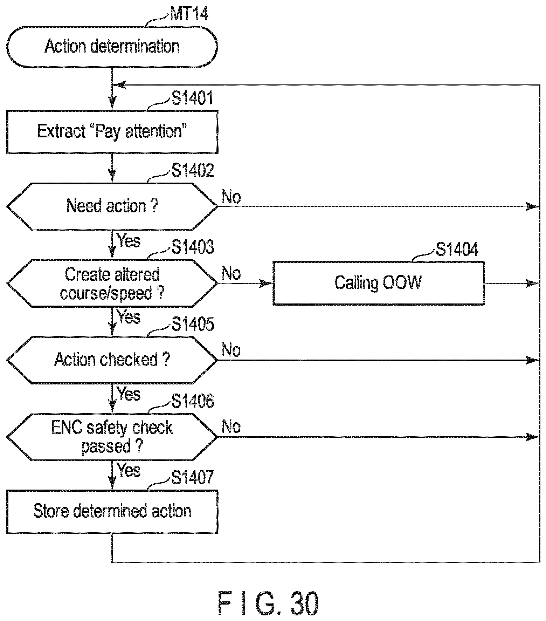

A procedure of action decision determination MT for making a determination to decide the action of the own ship 31 will be described with reference to FIG. 30.

The action determiner 131 extracts data on the other vessel 32 whose action timing is "Pay attention" and determines whether or not an action is necessary. The action determiner 131 determines that an action is necessary if the action timing is "Available", or returns to the initial process if the action timing is "Too early" (steps S1401 and S1402).

If determining that an action is necessary and not determining the changed action, such as keeping or altering the course or speed, the action determiner 131 executes "Calling OOW" and returns to the initial process (No in step S1403, and step S1404). In this case, keeping the course and speed also includes the action by stand-on vessel in a situation where the conduct of the stand-on vessel is applied to the own ship 31.

The action determiner 131 determines the course and speed, based on the "applicable rules" of the integrated target list, such that the CPA and BCR fall within a range greater than the set values. When the changed action is determined based on this determination of the course and speed, the action determiner 131 executes the next process, assuming that the changed action has been determined.

When determining the action such as keeping or altering the course or speed, the action determiner 131 checks the action with the action checker 132 (Yes in step S1403, and step S1405). When the action checker 132 cannot check the action, the action determiner 131 returns to the initial process (No in step S1405). When the action checker 132 can check the action, the action determiner 131 executes safety check with the ECDIS 26 or the like (Yes in step S1405, and step S1406). When the safety check for the information or data set by the user in the ECDIS 26 is passed, the action determiner 131 stores the determined action and returns to the initial process (Yes in step S1406, and step S1407). When the safety check is not passed, the action determiner 131 returns to the initial process (No in step S1406).

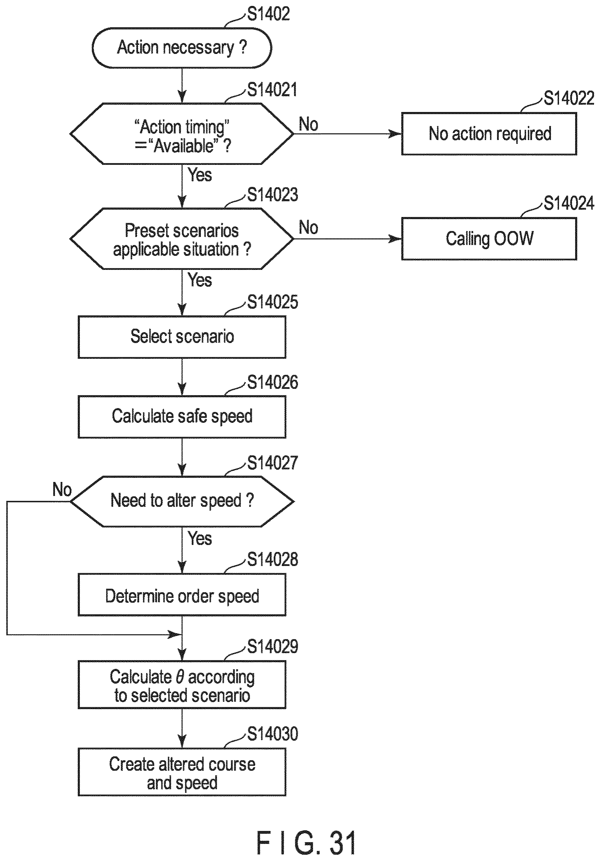

FIG. 31 shows the process of step S1402 in FIG. 30 in more detail. The action decision unit 131 determines that an action is necessary if the action timing in the integrated target list is "Possible", and determines that no action is required if the action timing is "Too early" or "Too late" (No in step S14021, and step S14021).

The action determiner 131 determines whether or not the situation is a situation to which the preset scenario can be applied if determining that the action is possible, or executes "Calling OOW" if determining that the situation is a situation to which the preset scenario cannot be applied (No in step S14023, step S14024) .

In the present embodiment, as shown in FIG. 4, multiple action scenarios that can be executed under certain conditions are preset. The water area in which the vessel is navigating, the number of other vessels 32, the rules, and the COLREG phase are used as the conditions. These conditions may be any information that can be acquired by the situation appraiser 123, and may be set by the user as appropriate.

The flow returns to FIG. 31 and, if determining that the situation is a situation to which the preset scenario can be applied, the action determiner 131 selects the optimal scenario at that time (Yes in step S14023, and step S14025). The action determiner 131 calculates a safe speed based on the selected scenario (S14026). The operation decision unit 131 compares the calculated safe speed with the current vessel speed and, if determining that alternation of a speed is necessary, it calculates a speed command and calculates a course change angle θ based on the selected scenario (Yes in step S14027, step S14028, and step S14029). If determining that the alternation of the speed is not required, the action determiner 131 does not calculate a speed command, but calculates the altered course angle θ based on the selected scenario (No in step S14027, and step S14029). Accordingly, the altered course and speed are created (step S14030).

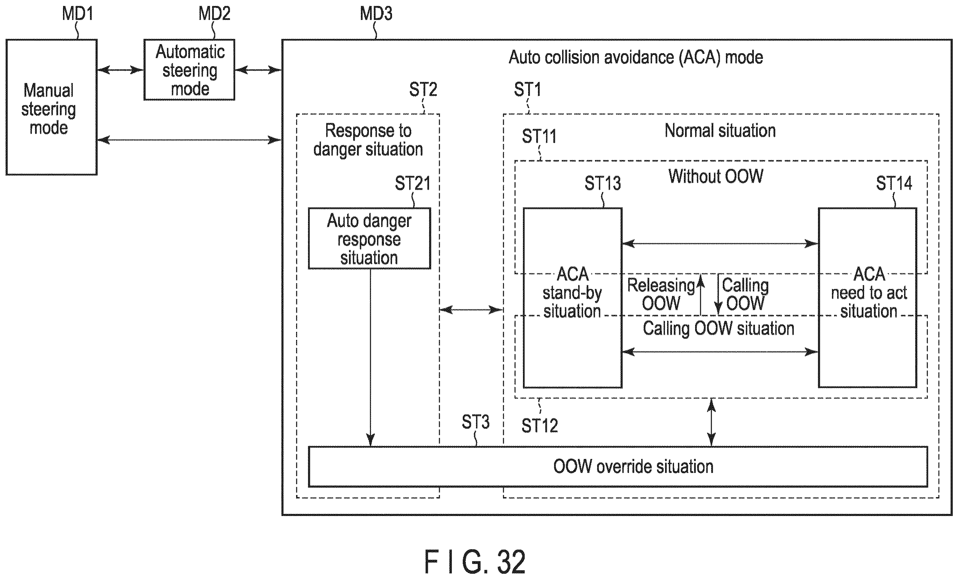

Next, the state transition of the collision avoidance executor 13 will be described with reference to FIG. 32.

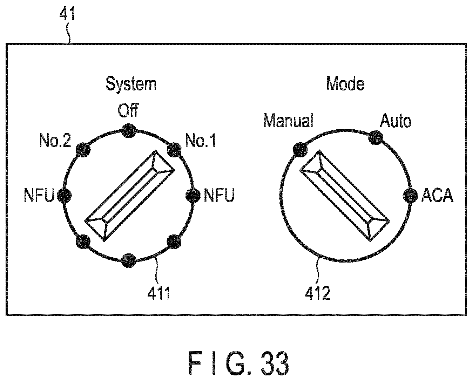

The collision avoidance executor 13 has three modes, i.e., manual steering mode MD1, automatic steering mode MD2, and Auto Collision Avoidance (ACA) mode MD3. For example, switching of the modes MD1 to MD3 is executed by a mode changeover switch 412 on a switch panel 41 shown in FIG. 33. In addition, a system selection switch 411 for selecting the autopilot in one of the dual systems may be provided on the switch panel 41. The system selection switch 411 may be configured in the same manner as a switch installed on a typical ocean-going vessel.

In the auto collision avoidance mode MD3, actions are executed based on state transitions as internal processing of the collision avoidance executor 13. The collision avoidance executor 13 executes state transitions based on the information managed in the integrated target list, and the like.

The auto collision avoidance mode MD3 has two states, i.e., a normal state ST1 and a danger response state ST2, and an OOW override state ST3 that can be executed from the normal state ST1 and the danger response state ST2. The OOW override state ST3 is a state in which a decision input by the user has priority over a decision of the action determiner 131, i.e., a so-called override is executed, and manual operation is executed regardless of change of the switch.

The collision avoidance executor 13 switches the state to the normal state ST1 if the action timing is not "Too late", or switches the state to the danger response state ST2 if the action timing is "Too late".

The normal state ST1 is divided into a no-OOW state ST11 and a calling OOW state ST12, and is also divided into an ACA stand-by state ST13 and an ACA action required state ST14. Each state transition is executed based on the integrated target list data 116 managed by the integrated target list manager 121.

The no-OOW state ST11 is a state in which the OOW is not monitoring the operation of the collision avoidance executor 13. The calling OOW state S12 is a state in which the OOW is monitoring the operation of the collision avoidance executor 13.

The collision avoidance executor 13 switches the state to the calling OOW state ST12 when calling OOW is issued, and switches the state to the no-OOW state ST11 when the OOW is released from monitoring duties.

The ACA stand-by state ST13 is a state in which the auto collision avoidance action stands by. The ACA action required state ST14 is a state in which the auto collision avoidance action is required.

The collision avoidance executor 13 switches the state to the ACA action required state ST14 if the action timing is "Available", and switches the state to the ACA stand-by state ST13 if the collision avoidance action is completed. The danger response state ST2 transitions between an automatic danger response state ST21, which executes a programmed danger response, and the OOW override state ST3.

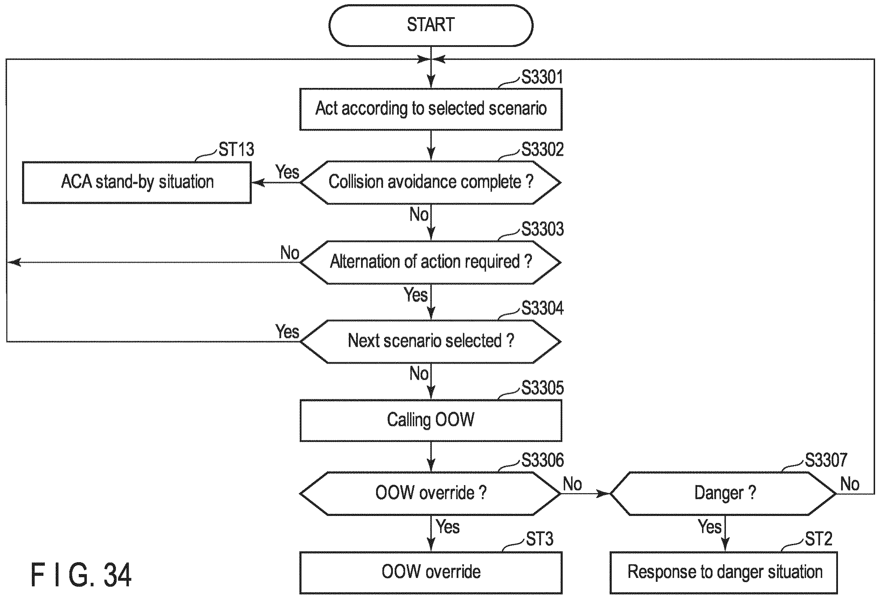

The processing executed by the action executor 133 will be described with reference to FIG. 34. The action executor 133 executes an action based on the selected scenario and, when determining that the collision avoidance is completed, transitions to the ACA stand-by state ST13 (steps S3301, and Yes in S3302).

The action executor 133 determines whether the alternation of action is required due to a change in situation if determining that the collision avoidance is not completed, and determines whether the next scenario has been selected by the action determiner 131 if determining that the alternation of action is required (No in step S3302, Yes in step S3303, and step S3304).

If no alternation of action is required or if the next scenario is selected, the action based on the selected scenario continues to be executed (No in step S3303, Yes in step S3304, and step S3301).

In contrast, if the next scenario is not selected, the action executor 133 executes calling OOW (step S3305). The action executor 133 transitions to the OOW override state ST3 if an operation of being overridden is executed by the OOW (Yes in step S3306), or it is determined whether a dangerous state exists if the operation is not executed (No in step S3306, and step S3307). If it can be determined that the state is not dangerous even when the operation of being overridden by the OOW is not executed, the operation executor 133 continues to execute an action based on the selected scenario (No in step S3307, and step S3301). In contrast, if determining that the state is in danger, the action executor 133 transitions to the danger response state ST2 (Yes in step S3307).

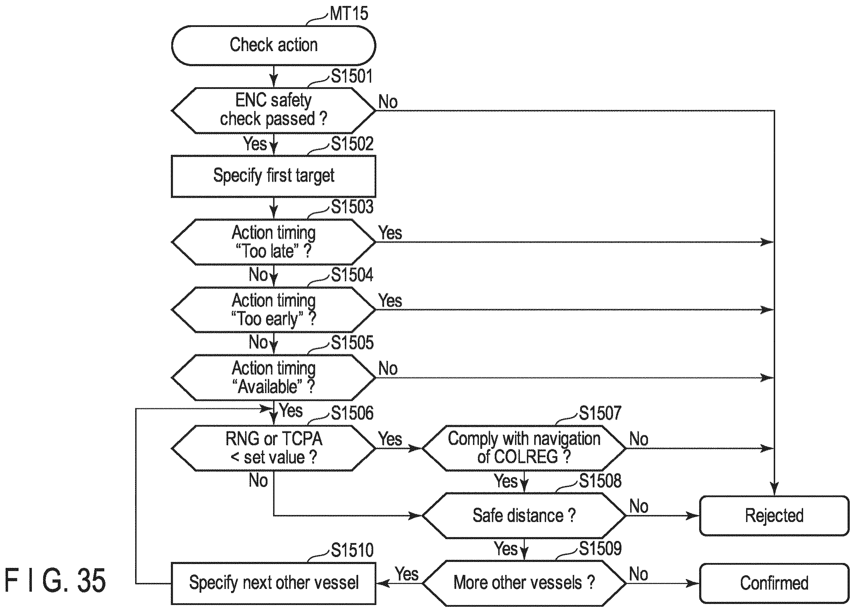

A procedure of action check determination MT15 for checking the action of the own ship 31 will be described with reference to FIG. 35.

The action checker 132 identifies a first other vessel 32 for which action needs to be checked, and determines that the action check is to be rejected for the other vessel 32 that does not pass the safety check (No in step S1501). The reason why the action checker 132 also executes the safety check following the action determiner 131 is to check an action input from outside.

If an item other than "Too late", "Too early", and "Available" is set in the action timing items, the action checker 132 determines that the action check is rejected (Yes in step S1503, Yes in step S1504, and No in step S1505).

If "Available" is set in the action timing items, the action checker 132 determines whether or not the action under COLREG is applied to the situation. More specifically, the action checker 132 determines whether or not the range (RNG) or TCPA is below a preset value (Yes in step S1505, and step S1506). The set value is a lower limit of a value to which the conduct in the COLREG situation is not applied. Therefore, a case where the range or TCPA is below the set value is the situation to which the conduct of COLREG is applied.

If determining that the range or TCPA is below the set value, the action checker 132 determines whether or not the action complies with the conduct defined under COLREG (Yes in step S1506, and step S1507).

If determining that the action does not comply with the conduct defined under COLREG, the action checker 132 determines that the action check is rejected (No in step S1507).

If determining that a safe distance cannot be maintained or secured with the avoidance action, even in a case complying with the conduct defined under COLREG or a situation to which COLREG is not applied, the action checker 132 determines that the action check is rejected (No in step S1506, Yes in step S1507, and No in step S1508).

If determining that a safe distance can be maintained or secured, the action checker 132 determines whether or not there are any other vessels 32 whose action needs to be checked (Yes in step S1508, and step S1509). If determining that there are other vessels 32 whose action needs to be checked, the action checker 132 specifies the next other vessel 32 and determines whether or not the range or TCPA of the specified other vessel 32 is below the set value (Yes in step S1509, step S1510, and step S1506).

When the action checker 132 determines a safe distance, the conditions include a situation that the distance does not fall below the CPA set as the safe passing distance. However, an upper limit of the altered course angle for collision avoidance may be set in order to keep deviation from the original course line within an acceptable range or to prevent the large alteration from being executed at sole discretion of the system. In addition, if the alternation exceeds the upper limit on the altered course angle, the action checker 132 may determine that the action check is rejected or may execute "Calling OOW".

If for all of the other vessels 32 whose actions need to be checked, not determining that the action have been rejected, the action checker 132 ends the action check and determines that the action has been checked (No in step S1509).

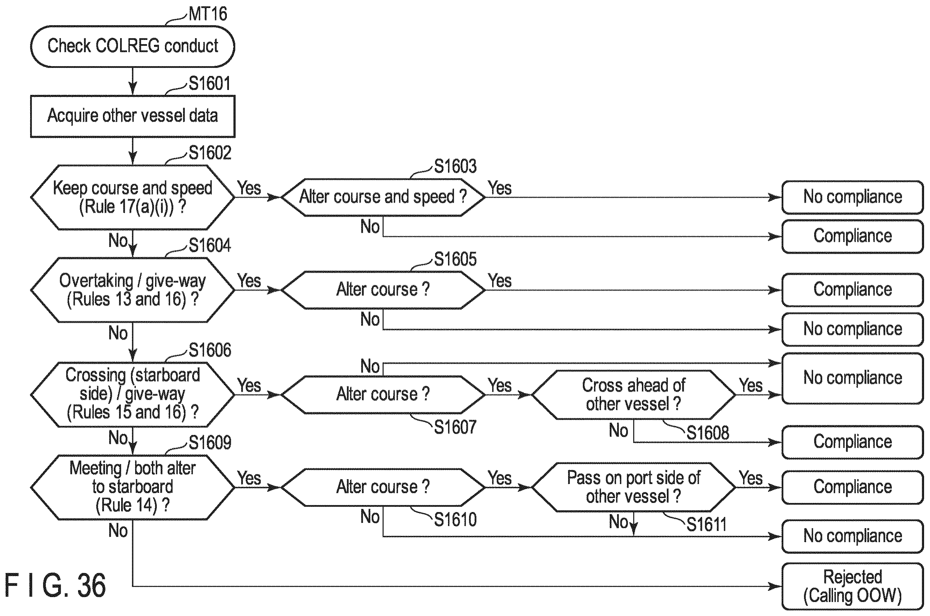

A procedure of conduct check determination MT16 for checking the conduct of the own ship 31 will be described with reference to FIG. 36.

The navigation assistance system 1 acquires data of the other vessel 32 that is considered as the target (step S1601). If "Keep course and speed (Rule 17(a) (i))" is set in the applicable rule items, the navigation assistance system 1 determines whether or not alternation of the course or speed is proposed (Yes in step S1602, and step S1603).

The navigation assistance system 1 determines no compliance with COLREG if determining that alternation of the course or speed is proposed (Yes in step S1603), and determines compliance with COLREG if determining that no alternation of the course or speed is proposed (No in step S1603).

If "Overtaking/Give-way (Rules 13 and 16)" is set in the applicable rule items, the navigation assistance system 1 determines whether or not alternation of the course due to overtaking is proposed (Yes in step S1604, and step S1605).

The navigation assistance system 1 determines compliance with COLREG if determining that alternation of the course due to overtaking is proposed (Yes in step S1605), and determines no compliance with COLREG if determining that no alternation of the course is proposed (No in step S1605).

If "Crossing (starboard side)/Give-way (Rules 15 and 16)" is set in the applicable rule items, the navigation assistance system 1 determines whether or not alternation of the course is proposed (Yes in step S1606, and step S1607).

If determining that no alternation of the course is proposed, or that alternation of the course is proposed but that alternation of the course is to cross the bow of the other vessel 32, the navigation assistance system 1 determines no compliance with COLREG (No in step S1607, Yes in step S1607, and Yes in step S1608). If determining that alternation of the course which may not be crossing the bow of the other vessel 32 is proposed, the navigation assistance system 1 determines compliance with COLREG (Yes in step S1607, No in step S1608).

If "Meeting/Both alter to starboard (Rule 14)" is set in the applicable rule items, the navigation assistance system 1 determines whether or not alternation of the course is proposed (Yes in step S1609, and step S1610).

If determining that no alternation of the course is proposed, or that alternation of the course is proposed but that alternation of the course is not to pass on the port side of the other vessel 32, the navigation assistance system 1 determines no compliance with COLREG (No in step S1610, Yes in step S1610, and No in step S1611).

If determining that alternation of the course to pass on the port side of the other vessel 32 is proposed, the navigation assistance system 1 determines compliance with COLREG (Yes in step S1610, and Yes in step S1611).

If determining that none of the above-described rules are set in the applicable rule items, the navigation assistance system 1 rejects determination of the conduct check and executes "Calling OOW". Incidentally, in the determination in any of the above processing, the navigation assistance system 1 may execute "Calling OOW" in an unexpected case where the system cannot make determination.

A method of calculating the numerical values used in the determination will be described with reference to FIG. 37.

In determination of the risk of collision using the radar 21, with speed vectors of the own ship 31 and the other vessel 32, first, the relative bearing (R.BRG) and the range (RNG) are obtained as numerical values indicating the relative relationship between the own ship 31 and the other vessel 32, on a polar coordinate system showing the direction clockwise, with the vessel's bow heading as the top (so-called "head up") or north as the top (so-called "north up") as 0°, with the own ship 31 used as the origin. In the past, the relative vectors have been developed on a flat plotting paper, and numerical values used for the determination of collision avoidance such as CPA and BCR have been calculated using trigonometric functions. In recent years, calculated values have been displayed as a function of the radar.

In the navigation assistance system 1, the position of the own ship 31 at the time of calculation is set as the origin, and processing is executed as a straight line and coordinates on the xy axis (unit NM) set in north up.

More specifically, as the own ship coordinates (OS) and other vessel coordinates (TV), values obtained by converting their latitude and longitude into x and y coordinates, with the own ship 31 at the time of the determination used as the origin, are used, and the navigation assistance system 1 obtains coordinates of the future predicted point, based on the speeds of the own ship 31 and vessel 32, and the elapsed time, at that time.

An own ship's speed vector (vO) can be determined from speed (SPD_O) and course (CRS_O) of the own ship 31, which are obtained from the navigation equipment, and an other vessel's speed vector (vT) can be determined from speed (SPD_T) and course (CRS_T) of the other vessel. From these, the relative vectors (rvT, rvO) between the own ship 31 and the other vessel 32 can be calculated.

In the navigation assistance system 1, the following straight lines are specified by their slopes and intercepts, and the coordinates of virtual points for making various determinations are specified by the intersections of the lines. In addition to the CPA and BCR in each coordinate system, the navigation assistance system 1 also calculates the coordinates of an Abeam Crossing Range (ACR), which is the point where a straight line obtained by extending the relative vector crosses a straight line indicating the Abeam of the own ship 31 and the other vessel 32, which is orthogonal to the heading.

In this example, rvT line is a line which includes the relative vector rvT passing through the other vessel coordinates (TV), and cpaO line is a line which passes through the own ship coordinates (OS) and is orthogonal to the rvT line. In addition, bcr line is a line which is obtained by extending the bow-stern line of the own ship 31 or the other vessel 32, and acr line is a line which passes through the own ship coordinates (OS) or the other vessel coordinates (TV) and is orthogonal to the bcr line.

CPA(O) is the point where the rvT line and the cpaO line intersect at right angles, and the distance from the own vessel's position to the intersection point CPA(O) is denoted by CPA. BCR(O) is the intersection point of the rvT line and the bcrO line, and the distance from the own ship's position to the intersection point BCR(O) is denoted by BCR. If the intersection point is in the direction of the own ship's bow, the other vessel 32 passes on the blow of the own ship.

ACR(O) is the intersection of the rvT line and the acrO line. The other vessel 32 passes on the starboard side of the own ship 31 if the intersection is on the side of the bcrO line rotated 90 degrees clockwise from the bow direction (starboard side), and the other vessel 32 passes on the port side of the own ship 31 if the intersection is on the side rotated 90 degrees counterclockwise.

Whether or not to cross the bow of the other vessel 32 can be determined to be Yes if the intersection point of an extension of the bcrT line of the other vessel 32 and the rvO line including the relative vector rvO passing through the own ship coordinates (OS) is in the bow direction. As for "whether or not to pass on the port side of the other powered vessel together" can be determined to be Yes if the intersection point ACR(O) of the acrO line and the rvT line of the own ship 31 and the intersection point ACR(T) of the acrT line and the rvO line of the other vessel 32 are on their respective port sides.

Such determination of the action check may be executed in advance for a series of check points from the end of the collision avoidance to returning to the original course line when the action determiner 131 formulates an action plan related to the collision avoidance or may be executed each time the action transitions to each check point.

Each of the above-mentioned values for the course and speed of the other vessel 32 at a future time is calculated on the assumption that the current values are maintained. However, if it is possible to predict changes in the course and speed of the other vessel 32 based on, for example, destination information obtained from the AIS 22, each value may be calculated including the predicted changes in course and speed.

Furthermore, by continuing to check the action even during the action and continuously monitoring the changes in each value, a situation in which it becomes inappropriate to continue the action, for example, due to an unexpected action by another vessel 32, can be detected quickly.

In addition, as shown in the figure, by imagining a circle with its center at the own ship coordinates (OS) and its radius at the CPA, which will be the target after the course change, and finding the relative vector (rv'T) after the course change on a tangent which passes through the other vessel coordinates (TV), the angle at which the own ship's speed vector (vO) is rotated (altering the course while keeping the speed) can be obtained. If one of the two tangents for which a solution can be found that complies with the applicable rules as described above is adopted, the desired altered course angle can also be obtained.

Thus, the navigation assistance system 1 can easily execute calculations to check compliance with COLREG conduct, by assuming the course directions of the own ship 31 and the other vessel 32, as well as straight lines extending in a direction orthogonal to the course directions, and based on the intersections between these straight lines and the relative vectors.

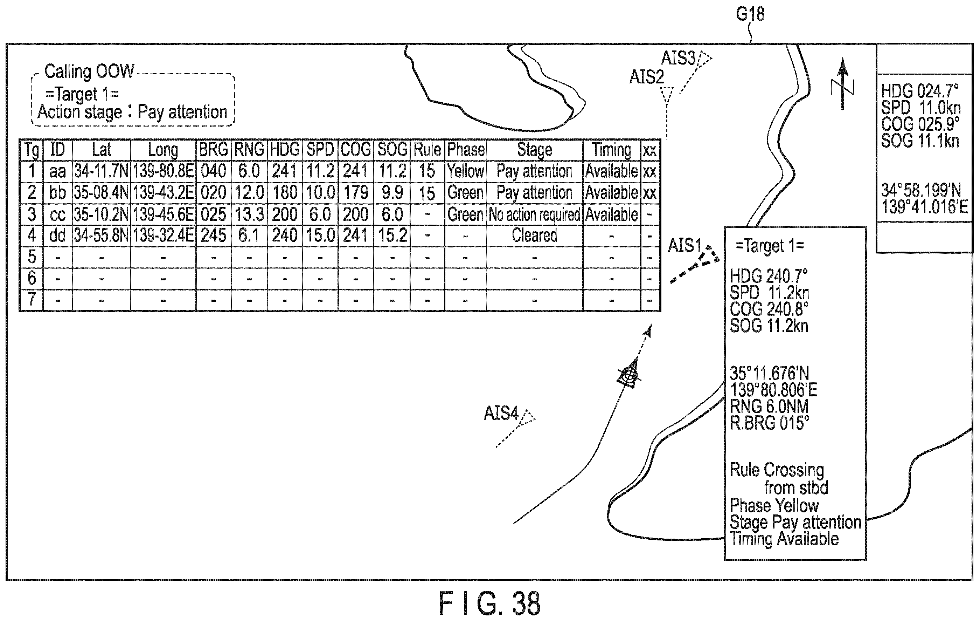

A screen G18 of the user terminal 16 that displays the state of the lookout executor 12 will be described with reference to FIG. 38. Incidentally, the screen G18 described here is an image diagram showing one example, and the displayed contents may be freely changed.

The screen G18 shows an example in which information on the own ship 31, an integrated target list, and information on the selected other vessel 32 are displayed on the ECDIS 26. Additional information on multiple other vessels 32 is displayed in a list in the integrated target list. As regards another vessel 32 selected from the list and highlighted, an additional information window for only one other vessel 32 is displayed. A list of multiple vessels may not be displayed, but a window for each vessel may be displayed depending on the size of the electronic navigation chart display screen.

The applicable rules and the fixed rules can be displayed in the integrated target list. The applicable rules and the fixed rules are estimated according to the rule estimation logic, based on the relative relationship between the own ship 31 and the target and the surrounding information. The information required to specify the relative relationship between the own ship 31 and the target and the surrounding information is included in the own ship setting data 113 and the situational awareness data 115.

The navigation assistance system 1 can therefore display the actions which comply with various rules that apply to the conduct of the own ship 31, and the reasons for those determinations, based on the own ship setting data 113 and the situational awareness data 115. In addition, in the calling OOW state ST12, a display screen which warns this matter may display the other vessel 32 considered as the target and the reason.

Furthermore, a function such as a trial maneuver installed in the radar 21 may be provided, and a positional relationship in future between the own ship 31 and the other vessel 32 may be calculated and displayed on the screen G18, based on the actions determined by the action determiner 131 and checked by the action checker 132.

To ensure safe navigation, users are required to be familiar with the existing navigation equipment. For example, training and its certificate are required to use radar, ECDIS, and the like. In this system as well, a training and education system for users to learn a method of its use is considered to be required. In addition, after using the ACA for a long period of time or before navigating an area for which caution is required, it is necessary to check whether manual steering can be executed. Such an operation procedure manual may be presented to the user as electronic data, based on the operation of buttons and the like provided on the screen G18.

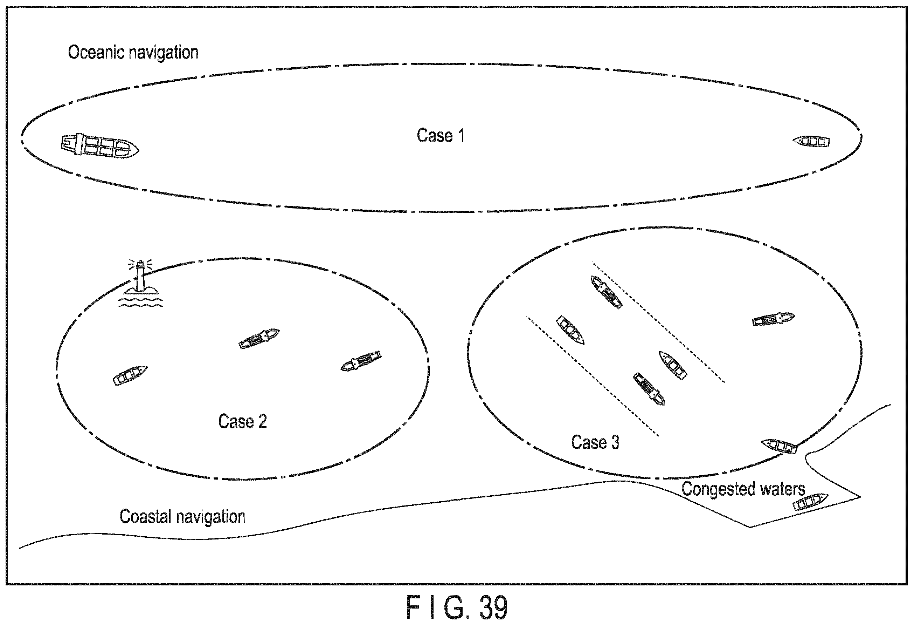

A use case of the navigation assistance system 1 will be described with reference to FIG. 39.

When using the navigation assistance system 1 for automated navigation, the following constraints need to be taken into consideration in each case shown in FIG. 19.

Case 1 is mainly intended for oceanic navigation, and the number of other vessels 32 to be considered is one or a small number. This is a situation in which the number of occurrence of alternation of the course and speed, generally referred to as the collision avoidance, is small and, even if it occurs, early avoidance action is available. This can be handled using a rule set based on the above-described flowcharts, but calling OOW needs to be executed appropriately when the reliability of the lookout executor 12 is lowered.

Case 2 is mainly intended for coastal navigation where there are many other vessels 32 and alternation of the course and speed for collision avoidance occurs more frequently than that in oceanic navigation. It is necessary to take into consideration the influence of the collision avoidance action on third vessels so as not to approach new other vessels 32 together with the collision avoidance action. In addition, since there are often restrictions due to the topography such as water depth, fishing gear, and navigation obstacles, nautical chart information also needs to be taken into consideration, in the collision avoidance. Therefore, a more detailed rule set that is linked to the nautical chart information needs to be registered in advance.

Case 3 is mainly intended for congested waters, pilotage districts, and areas of ports and bays, and is a situation in which the Maritime Traffic Safety Act, Port Regulations Act, and other special rules are applied in addition to the influence on the third vessels and the consideration of nautical chart information as described above. The number of other vessels 32 does not simply increase, but special actions such as traffic separation, alternation of the course and the time adjustment to head to pilot stations, anchorages, and other special locations occur. In addition, in a coastal area, there are various vessels such as fishing boats, passing vessels, and work boats, and situations in which the intention of actions cannot be understood also increase. Therefore, other vessels 32 whose behavior is difficult to predict increase, and a detailed rule set including special rules linked to the nautical chart information needs to be registered in advance. For prediction of the behavior of other vessels 32, it is necessary to be able to make advanced determination including not only the information obtained from the existing navigation equipment, but image recognition.

According to the present embodiment, since the determination of the rule applicability and compliance is executed based on the integrated target list, by using the navigation assistance system 1, the actions which comply with various rules applicable to the conduct of the own ship 31 and the reason for determination can be clarified.

Furthermore, the determination of the actions that meets the conditions required by the rules applicable to the own ship 31 and the collision avoidance actions checking the compliance with the rules can be executed at appropriate timing.

In addition, by detecting situations that cannot be described in the rule set, situations where the navigational watch cannot be continued automatically, and situations where the reliability of the surrounding situation data is lowered, and notifying the user of the detected situations, the user can be made aware of situations to which humans need to correspond, thereby improving the safety of navigational watch duties.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A navigation assistance system **characterized by** comprising:
a rule estimation logic storage storing a rule estimation logic for estimating a relationship in application of a rule to conduct of a vessel;
an own ship setting data storage storing own ship setting data including a parameter indicating a characteristic of an own ship;
an own ship data acquirer acquiring own ship data indicating information on a state of the own ship;
a target data acquirer acquiring target data indicating information on a state of a target;
a surrounding data acquirer acquiring surrounding data indicating information on a state of surrounding of the own ship;
a situational awareness data generator generating situational awareness data indicating a situation for determining an action of the own ship, based on the own ship data acquired by the own ship data acquirer, the target data acquired by the target data acquirer, and the surrounding data acquired by the surrounding data acquirer;
a relative relationship specifier specifying a relative relationship between the own ship and the target, based on the situational awareness data generated by the situational awareness data generator; and
a rule estimator estimating an applicable rule to be applied to the own ship, based on the relative relationship specified by the relative relationship specifier and the own ship setting data stored in the own ship setting data storage, in accordance with the rule estimation logic stored in the rule estimation logic storage.

2. The navigation assistance system of claim 1, **characterized by** comprising:
an integrated target list storage storing an integrated target list for managing integrated target data obtained by integrating additional information used to estimate the applicable rule by the rule estimator with the target data acquired by the target data acquirer;
an integrated target data generator generating the integrated target data including the applicable rule estimated by the rule estimator; and
an integrated target data updater updating the integrated target list stored in the integrated target list storage, based on the integrated target data generated by the integrated target data generator.

3. The navigation assistance system of claim 2, **characterized in that**
the integrated target data updater retains the applicable rule as a fixed rule, based on the additional information, during a period of time in which it is assumed to be fixed that the applicable rule is applied to the own ship.

4. The navigation assistance system of claim 3, **characterized by** comprising:
an action checker checking compliance of an own ship action considered as an action of the own ship with at least one rule of the fixed rule or a common rule applied regardless of a situation of the own ship, based on the integrated target list stored in the integrated target list storage and the situational awareness data generated by the situational awareness data generator.

5. The navigation assistance system of claim 3, **characterized by** comprising:
an action determiner determining an own ship action considered as an action of the own ship, to avoid collision with the target, based on the integrated target list stored in the integrated target list storage and the situational awareness data generated by the situational awareness data generator.

6. The navigation assistance system of claim 5, **characterized by** comprising:
a preset scenario storage storing preset scenario data including the own ship action corresponding to a situation of each of one or more conditions for determining decision of the own ship action and multiple check points, and **characterized in that**
the action determiner includes determining the own ship action, based on the preset scenario data stored in the preset scenario storage.

7. The navigation assistance system of claim 5, **characterized by** comprising:
a conversion dictionary storage storing conversion dictionary data for converting a practical description expressed in natural language into a machine readable description capable of being processed by a computer, and **characterized in that**
the action determiner includes determining the own ship action, based on the conversion dictionary data stored in the conversion dictionary storage.

8. The navigation assistance system of claim 4, **characterized in that**
the additional information includes estimated values of the time it takes for the own ship to reach multiple specified points including a closest point at which the own ship and the target are closest to each other, a point at which the target crosses a bow of the own ship, and a point at which the target crosses a beam of the own ship, and of a distance between the own ship and the target, and
the action checker includes checking the compliance, based on the estimated value of the distance included in the integrated target list stored in the integrated target list storage, and the own ship setting data stored in the own ship setting data storage.

9. The navigation assistance system of claim 4, **characterized by** comprising:
a rule set storage storing a rule set defining a correspondence of a parameter used in the rule estimation logic, visibility information indicating a state of visibility around the own ship, and water area information indicating a water area where the own ship navigates, and **characterized in that**
the action checker includes checking compliance with a rule applied to the own ship, which is selected from multiple rules, based on the rule set stored in the rule set storage.

10. The navigation assistance system of claim 4, **characterized in that**
the rule estimation logic storage stores a rule estimation logic for estimating a retained rule in a case where the own ship is a stand-on vessel, and
the action checker includes checking compliance with the retained rule when the own ship is the stand-on vessel under the fixed rule.

11. The navigation assistance system of claim 1, **characterized in that**
the own ship setting data includes a calling user condition, and **characterized by** comprising:
a calling user processor processing notifying a user terminal used by a user of calling when the calling user condition is met based on the situational awareness data generated by the situational awareness data generator.
